# EUROPEAN PATENT SPECIFICATION

(11) **EP 3 099 143 B1**
(45) Date of publication and mention of the grant of the patent: **18.03.2020**
(21) Application number: 15169832.1
(22) Date of filing: 29.05.2015
(51) Int. Cl.: H05B 47/10, G06F 3/048, G06F 3/0484, H05B 47/175, H05B 47/155

(54) **METHOD AND ARRANGEMENT FOR CREATING LIGHTING EFFECTS**
VERFAHREN UND ANORDNUNG ZUR ERZEUGUNG VON BELEUCHTUNGSEFFEKTEN
PROCÉDÉ ET DISPOSITIF DE CRÉATION D'EFFETS D'ÉCLAIRAGE

(43) Date of publication of application: 30.11.2016
(73) Proprietor: Helvar Oy Ab, 02150 Espoo (FI)
(72) Inventor: Moreira, Andre, Dartford, Kent DA2 7SY (GB); Foster, Colin, Dartford, Kent DA2 7SY (GB)
(74) Representative: Berggren Oy, Helsinki & Oulu

(56) References cited:
- EP-A1- 2 706 821
- WO-A1-01/99475
- WO-A1-2009/069070
- US-A1- 2005 275 626
- US-A1- 2008 140 231
- US-A1- 2011 115 413
- US-A1- 2013 187 948
- US-B1- 7 139 617

## Description

### FIELD OF THE INVENTION

The invention concerns the field of user interfaces used to create lighting effects. Especially the invention concerns the task of providing a user with intuitive and versatile controls for creating effects in which one or more of light intensity, hue, saturation, and colour temperature may vary over time.

### BACKGROUND

Many lighting systems are expected to change the intensity, hue, saturation, and/or colour temperature of one or more light sources over time. As an example the lighting system of an interior may need to have some diurnal rhythm to match the changes in natural daylight, to have a positive effect on alertness of the occupants of a room, and/or simply to make aesthetically pleasing changes in the atmosphere. Lighting effects that accompany a presentation may have an important role in creating the appropriate ambiance, which develops over time as the presentation proceeds. Advertisements and other public displays often depend on changing effects in lighting to catch the attention of viewers and to maintain their interest.

Lighting effects of the kind described above are created by using a computer, with which the lighting designer composes a sequence of machine-readable instructions. They are stored in the memory of a lighting controller of some kind, which executes them with a given timing. Executing the instructions makes the lighting controller send control commands to drivers of light sources, which react by changing their output voltages and/or currents correspondingly.

A key factor of how intuitive and versatile the lighting designer finds the system is the user interface of the computer and its associated systems. As an example, if the lighting designer can pick a desired colour of lighting from a palette with a pointer device and get immediate visual feedback on the computer display of what the picked colour looks like, or if the system is in live mode and the picked colour immediately appears reproduced by the lighting system, the user experience is much better than if the lighting designer had to define the desired colour solely by using a text editor to input a triplet of R (red), G (green), and B (blue) values. Yet there remains to be seen a user interface that would allow intuitive and versatile designing of various features of lighting effects that change over time.

A patent document US 7,139,617 B1 discloses systems and methods for creation and design of lighting sequences. A controller disclosed therein is capable of executing programs for lighting sequences and modifying the output and/or execution of the program based on external signals. Similar solutions are also disclosed in patent application documents US 2008/0140231 A1 and WO 01/99475 A1.

A patent application document EP 2 706 821 A1 discloses various features of a lighting control system, with e.g. a dimmer that can superpose identification information and lighting information, as well as wireless communications for outputting control signals to the dimmer.

A patent application document US 2011/0115413 A1 discloses a wagering game system and its operations. Light effects can be configured for lighting device objects, and lighting control instructions are generated in a common data format.

A patent application document WO 2009/069070 A1 discloses a method and a device for programming dynamic light scenarios. Luminosity and lighting period values are associated to the various colours according to each individual scenario wherein a control sequence is generated for each scenario.

A patent application document US 2013/0187948 A1 discloses various arrangements for displaying a value of a data point on a graph.

A patent application document US 2005/0275626 A1 discloses methods and systems for providing audio/visual control systems that also control lighting systems, including for advanced control of lighting effects in real time by Video Jockeys and similar professionals

### SUMMARY

It is an objective of the present invention to provide a method and devices for creating effects in which one or more of light intensity, hue, saturation, and colour temperature may vary over time.

The objectives of the invention are reached with a method and apparatus as defined by the respective independent claims.

According to an example embodiment, there is provided a method for displaying to a user a feature of a lighting effect to be generated. The method comprises:
- displaying a time axis, and displaying a representation of said lighting effect as a graph along said time axis,
- displaying a selection area separately from said time axis, said selection area representing characteristics of light that comprise intensity and zero, one, or two of: colour temperature, colour,
- as a response to a user input, defining a first location in terms of time and a second location in terms of at least one of said characteristics, and
- displaying a point at said first location with respect to said time axis, and a point at said second location with respect to said selection area, along with an indication of the point at said second location being a parallel representation of the point at said first location.

According to another example embodiment, there is provided a computer program stored on a non-volatile medium and comprising machine-readable instructions that, when executed by one or more processors, cause the implementation of a method of the kind described above.

According to yet another example embodiment, there is provided an arrangement comprising a programmable electronic device programmed to implement a method of the kind described above.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF DRAWINGS

- Fig. 1: illustrates components and connections in a lighting system,
- fig. 2: illustrates a graphical user interface,
- fig. 3: illustrates various ways of displaying a point,
- fig. 4: illustrates displaying relations between consecutive points,
- fig. 5: illustrates changing an intensity value associated with a point,
- fig. 6: illustrates changing a colour temperature value associated with a point,
- fig. 7: illustrates changing a colour value associated with a point,
- fig. 8: illustrates changing intensity and time values associated with a point,
- fig. 9: illustrates changing fades between points,
- fig. 10: illustrates moving linked points,
- fig. 11: illustrates colour normalization,
- fig. 12: illustrates time normalization,
- fig. 13: illustrates display functions during test mode,
- fig. 14: illustrates display functions related to daylight harvesting,
- fig. 15: illustrates relative points, and
- fig. 16: illustrates displaying two lighting effects simultaneously.

### DETAILED DESCRIPTION OF EMBODIMENTS OF THE INVENTION

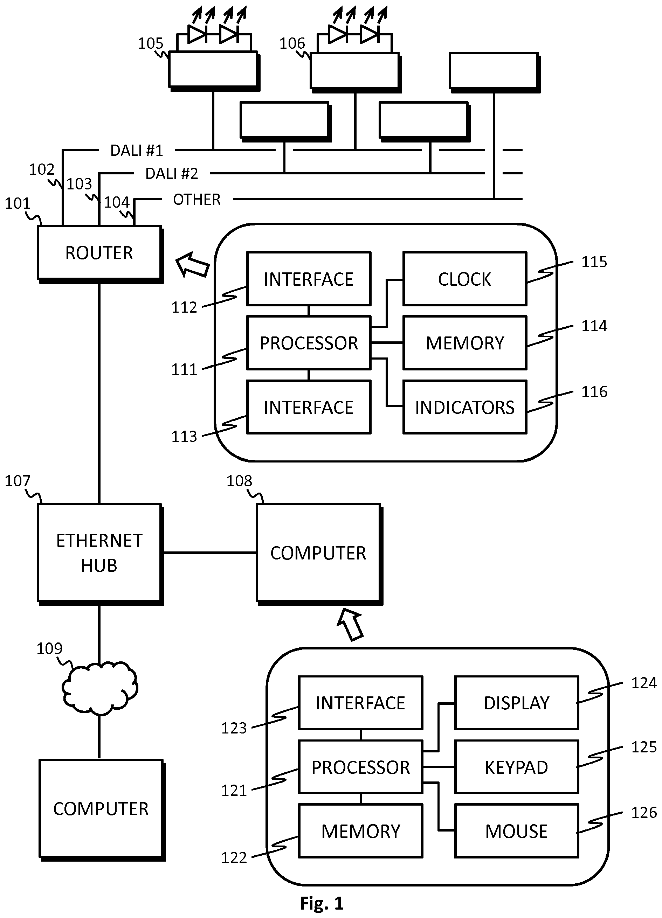

Fig. 1 illustrates components and connections in a lighting system with advanced control features. A lighting controller, which in this text is called a router 101, has connections to one or several buses of the lighting system, of which buses 102, 103, and 104 are shown as examples. Types of buses are for example DALI (Digital Addressable Lighting Interface), SDIM (or S-DIM), DMX, RDM (Remote Device Management), KNX, and others. Instead of or in addition to wired buses there may be also wireless communication connections to and from the router 101. Devices of the lighting system, such as drivers 105 and 106 of light sources, are coupled to the router 101 through the buses and/or the wireless communication connections.

The router 101 has also a connection to an external communications network. In the example of fig. 1 this connection couples the router 101 to an Ethernet hub 107, to which the computer 108 of a programmer can be connected directly or through a wide area network 109, such as the internet. How the connections between the devices have been organized is of little importance to the present invention, as long as the computer 108 of the programmer is equipped with or has otherwise access to suitable software for creating lighting effects, and the connections allow transferring such created lighting effects to the router 101 for execution.

The router 101 is essentially a special-purpose computer and comprises a processor 111, interface(s) 112 for connection(s) within the lighting system, at least one interface 113 (which may be the same as the interface 112) for exchanging data related to external control like programming of lighting effects, a memory 114, and a clock 115. The memory 114 is for storing program information, i.e. machine-readable instructions through the execution of which the router 101 manages the lighting system, as well as for storing run-time data. The clock 115 enables the router 101 to time the execution of particular machine-readable instructions with appropriate instances of time, for which purpose the clock 115 may also comprise calendar functions and/or any other time bases. The router 101 may also comprise user interface features, such as visual indicators 116.

The computer 108 of a programmer comprises a processor 121 and a memory 122 for storing program information, i.e. machine-readable instructions through the execution of which the processor 121 implements for example methods according to embodiments of the invention. An interface 123 allows the computer 108 to communicate with e.g. the router 101 over a communications connection. Additionally the computer 108 comprises a user interface for enabling bidirectional interactions with a user. In the example of fig. 1 the user interface comprises a display 124, a keypad 125, and a mouse or corresponding pointing device 126, but the user interface may consist of different parts, such as e.g. a touch-sensitive display and/or a combination of a speech synthesizer and a speech recognition arrangement.

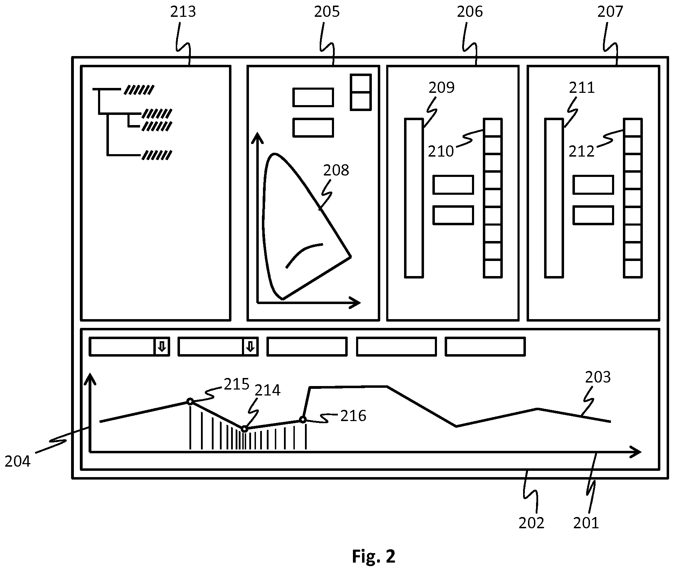

Certain aspects of the present invention are associated with the way in which the computer 108 communicates with the user through its user interface. Fig. 2 illustrates an example of how a display of the computer 108 may look like. A method for displaying to the user a feature of a lighting effect to be generated may comprise displaying a time axis. In the example of fig. 2 the time axis 201 is displayed as a straight line that extends horizontally across the base of a window 202. A representation of the lighting effect is displayed as a graph 203 along the time axis 201. The other axis of the coordinate system in which the graph 203 is displayed is for example an intensity axis 204, so that the graph 203 basically represents the lighting effect to be generated in the form of intensity as a function of time. Both axes of the coordinate system may have units and division markers displayed, although these are not shown in fig. 2. Also other characteristics of light than intensity can be graphically illustrated in the coordinate system representation shown in window 202, as will be described later in more detail.

The method comprises also displaying a selection area separately from the time axis. The selection area represents characteristics of light, which may comprise intensity and may additionally comprise colour temperature, colour, or both of these. In the example of fig. 2 the selection area comprises three windows, which are the colour window 205, the colour temperature window 206, and the intensity window 207. These may be designated more generally as a colour selection sub-area, colour temperature selection sub-area, and intensity selection sub-area respectively. The colour window 205 displays the graphical illustration of a colour space 208 as well as some fields, exemplary roles of which are described in more detail later in this text. The colour temperature window 206 displays a colour temperature picker 209 with a continuous variation of colour temperature from one end to the other, a number of colour temperature selection boxes 210 that represent discrete grades of colour temperature, as well as some fields, exemplary roles of which are described in more detail later in this text. The intensity window 207 displays an intensity picker 211 with a continuous variation of intensity from one end to the other, a number of intensity selection boxes 212 that represent discrete grades of intensity, as well as some fields, exemplary roles of which are described in more detail later in this text.

Identifiers of colour, i.e. values that are used to unambiguously express a particular colour, are for example colour coordinates or coordinate values in the coordinate system in which the graphical illustration of the colour space 208 is shown. As an example, the colour window 205 of fig. 2 displays the CIE 1931 xy chromaticity diagram, in which a colour can be unambiguously identified with two coordinate values x and y. Other ways of displaying graphical illustrations of colour spaces exist, and the identifiers of colour may comprise other kinds of coordinates, like RGB values, CMYK values, or the like. The fields in the colour window may be used to express accurate numerical values of colour coordinates, as well as sample colours: moving a cursor across the graphical illustration of the colour space may cause the colour momentarily pointed at to appear as a larger surface in afield.

Identifiers of colour temperature, i.e. values that are used to unambiguously express a particular colour temperature, are for example temperature values in kelvins, referring to the absolute temperature of a theoretical blackbody radiator that would emit visible light of that particular spectral distribution. It is also customary to represent colour temperature on a colour scale ranging from one colour that a human observer regards warm (such as reddish orange) to another colour that a human observer regards cold (such as light blue). Thus the colour temperature picker 209 may be displayed as a continuous colour fade from the "warm" colour at one end to the "cold" colour at the other. The colour temperature selection boxes 210 may display discrete colours picked from the corresponding steps of the continuous colour fade. Numerical values may be displayed next to one or both of the colour temperature picker 209 and the colour temperature selection boxes 210. Fields within the colour temperature window 206 may display e.g. exact numerical values (in kelvins, or other selected identifier units) of a colour temperature currently pointed at.

Identifiers of intensity, i.e. values that are used to unambiguously express a particular intensity, are for example percentages ranging from 0% (meaning completely dark) to 100% (meaning full brightness). It is also customary to represent intensity on a scale of shades ranging from black (completely dark) to white (full brightness). Thus the intensity picker 211 may be displayed as a continuous fade of shades of grey from black at one end to white at the other. The intensity selection boxes 212 may display discrete shades of grey picked from the corresponding steps of the continuous fade. Numerical values may be displayed next to one or both of the intensity picker 211 and the intensity selection boxes 212. Fields within the intensity window 207 may display e.g. exact numerical values (in percentage, or other selected identifier units) of an intensity currently pointed at.

Fig. 2 shows only examples of the layouts of the various areas and windows, and many other layouts could be used. For example, the colour selection sub-area could display the graphical illustration of two or more colour spaces simultaneously, or any of the colour temperature selection sub-area and intensity selection sub-area could only display one of the picker or selection box alternatives. The various areas and windows could be sized and arranged on the display differently than in fig. 2, and even the user could change their sizes and their arrangement on the display, as is common in graphical user interfaces that consist of a multitude of separate windows.

At the top left corner in fig. 2 a directory view 213 is displayed; it may illustrate for example a hierarchical arrangement of addressable devices and/or functions such as lighting effects associated with and allocated to such devices.

Some of the displayed elements may involve active elements, such as drop-down menus, as is schematically illustrated with some of the fields in the window that displays the time axis 201. Other form of active elements may be elements associated with hidden help texts, so that bringing a cursor over such elements triggers displaying the help text that otherwise remains unseen. The use of active elements is known as such in graphical user interfaces. Some of the displayed elements have the nature of a coordinate system, either one-dimensionally (like the colour temperature picker 209 and the intensity picker 211) or two-dimensionally (like the graphical representation of a colour space 208 and the intensity vs. time coordinate system in window 202). In each case the user interface sets up the corresponding portion of the display area so that it is capable of detecting a location within the coordinate system that the user points at and/or selects, and forwarding the coordinate values of such detected location to the appropriate software routine for processing. The user interface is also capable of mapping given coordinates received from a software routine to the appropriate location in the portion of the display area set up as a coordinate system, and displaying given graphical symbols at given locations within the coordinate system.

From the viewpoint of data management each lighting effect can be considered to constitute a file, which can be opened, edited, stored, closed, and transferred from one storage medium to another. Opening a lighting effect with a computer program that is capable of displaying a view like that shown in fig. 2 causes the current description of the lighting effect to be read from the file, and the corresponding graphical illustration to be displayed. The description of the lighting effect in the file comprises, among others, a list of points. In the graphical illustration the points are represented as the vertices of the graph 203.

Embodiments of the method may comprise storing, for each of a plurality of (vertex) points of the graph 203, a point record that associates the point in question with a value of at least one characteristic (intensity, colour, colour temperature) of light. As an example we may consider point 214. Stored in the corresponding point record are a time value, an intensity value, and possibly a colour value and/or colour temperature value. The time value defines the location of point 214 in terms of time, i.e. the perpendicular projection of point 214 on the time axis 201. The intensity value defines the location of point 214 in terms of intensity, i.e. the perpendicular projection of point on the intensity axis 204. In other words the perpendicular distance of point 214 from the time axis 201 is proportional to the magnitude of an intensity value stored in the point record of point 214. If a colour value and/or a colour temperature value is stored in the point record of point 214, it can be said to define a further location of point 214 in terms of that characteristic of light.

In order to make the graphical representation in window 202 more illustrative the method may comprise displaying, between each of said plurality of points and its perpendicular projection on the time axis, an indicator colour indicative of either the colour temperature value or the colour value stored in the point record of the point in question. In the example of fig. 2 it is assumed that a relatively dark colour is associated with point 214, and somewhat lighter colours are associated with the preceding point 215 and the following point 216 respectively. In the schematic black and white representation the colour associated with each point is represented by the density of vertical hatching. The method comprises displaying, within an area between the displayed indicator colours of two consecutive points 215 and 214, or 214 and 216 of said graph, a fade from one of said displayed indicator colours to the other. In fig. 2 this is illustrated as a change in the density of the vertical hatching.

A lighting effect that changes over time may involve changes in intensity, changes in colour, and/or changes in colour temperature. Although a single lighting effect may comprise changes in all characteristics, at least for relatively inexperienced users it may be simpler to handle lighting effects that involve changes in only one or two of said characteristics of light. A lighting effect that only involves changes in intensity would be illustrated in window 202 as a graph, the perpendicular distance from the time axis 201 varies while the indicator colour between the graph and the time axis either stays the same or is missing altogether (which means that the colour displayed between the graph and the time axis is the same as the background colour of the window 202). A lighting effect that only involves changes in colour or colour temperature would be illustrated as a graph consisting of a straight line at a constant distance from the time axis 201 while the indicator colour between the graph and the time axis 201 varies.

Users frequently find it convenient if a user interface shows only options that are pertinent to the case at hand, and not options that could not be selected or utilized anyway. Therefore it may not be necessary or even desirable to show those selection sub-areas that are not currently pertinent. Embodiments of the method may comprise storing, for the lighting effect to be generated, an effect record that associates the lighting effects with one, two, or three of said characteristics of light. Then the step of displaying a selection area may comprise only disclosing that or those of an intensity selection sub-area, a colour temperature selection sub-area, and a colour selection sub-area that match a corresponding characteristic in said effect record.

The user interface, a display part of which is schematically shown in fig. 2, is bidirectional, allowing the user not only to view the graphical representation of a lighting effect to be generated, but also to edit the lighting effect. Bidirectional graphical user interfaces are well known in the art of computer programming, and implementing bidirectionality with a general-purpose computer is within the capability of a person skilled in the art, so the actual technology of bidirectional user interfaces is not described here in more detail. Some common functionalities are relied upon the following description:
- It is typical that a user can "point" at a displayed object, which means that the user uses a mouse, arrow keys, or other pointing device to move a displayed cursor on top of or next to the object in question. The computer receives movement information from the pointing device, converts the movement information into changes in the position of the cursor on the display, and keeps track of the current position the cursor on the display while all the time displaying the cursor at its updated location.
- It is also typical that the user can "select" a displayed object, which typically involves at least pointing at it but may also involve further use action, like pressing a key or clicking a mouse button. The computer system compares the current position of the cursor to the positions of the objects on the display, and temporarily stores an identifier of the particular object at the moment of noticing the selecting action by the user in a particular register used to store identifiers of selected objects. Selecting may be done by drawing a boundary around the objects to be selected, in which case the computer system stores the identifiers of all those objects in the register that are inside the boundary.
- Another typical feature is "moving", which typically involves the user first selecting an object and then indicating movement for example by moving a mouse or pressing arrow keys. Moving may involve the user indicating that he or she maintains the selection during the movement, for example by holding down a mouse button. The computer responds by tracking the movements indicated, changing the display coordinates of the moved object, and continuously updating its position on the display until the user indicates stopping the movement.
- Yet another typical feature is "highlighting", which typically involves changing the colour or other visual appearance of a displayed object for example to make it clear that this object is currently the selected object.

Embodiments of the method may comprise responding to a user input by defining a first location in terms of time and a second location in terms of at least one of intensity, colour, and/or colour temperature, and displaying a point at said first location with respect to the time axis and a point at said second location with respect to the selection area, along with an indication of the point at said second location being a parallel representation of the point at said first location. Examples of this aspect of the method may be divided into selecting an existing point and adding a new point. An example of selecting an existing point is described first in the following.

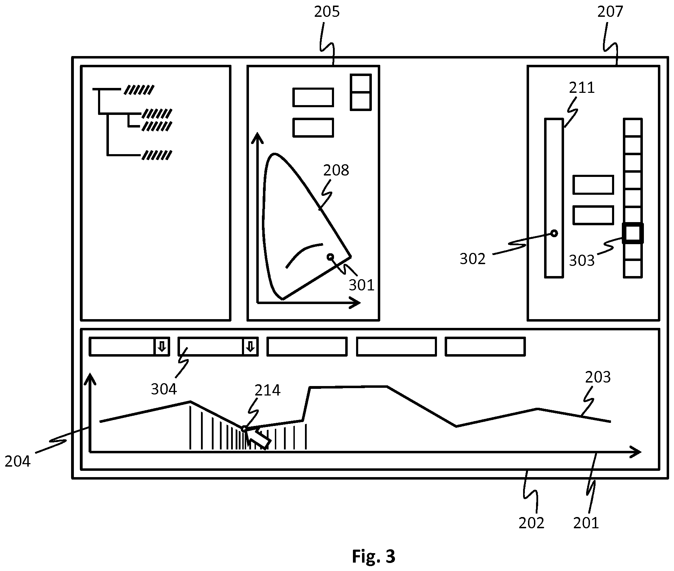

In fig. 3 it is assumed that the lighting effect to be generated involves changes in colour and intensity. Thus an effect record (not shown) is stored for the lighting effect to be generated that associates the lighting effect with colour and intensity, and the step of displaying a selection area comprises only disclosing the intensity selection sub-area (i.e. the intensity window 207) and the colour selection sub-area (i.e. the colour window 205), because these match a corresponding characteristic in the effect record. Also there is stored, for each of a plurality of points of the graph 203, a point record that associates the point in question with a value of two characteristics: intensity and colour.

A user input is detected, the user input being an expression of selecting one of said plurality of points. In the example of fig. 3 the user selected point 214. As a response to the user input, the act of defining a first location in terms of time consists of reading the time value stored in the point record of point 214. The act of defining a second location in terms of at least one of the characteristics of light consists of reading the intensity and colour values stored in the point record of point 214. The method comprises displaying a point (for example, in the form of a small circle) at said first location with respect to the time axis 201, and a point at said second location with respect to the selection area, along with an indication of the point at the second location being a parallel representation of the point in the first location. In fig. 3 three alternative ways are shown for displaying a point at said second location: at the appropriate location 301 within the graphical illustration of a colour space 208, at the appropriate location 302 within the intensity picker 211, and at the appropriate intensity selection box 303.

The indication of the point at the second location being a parallel representation of the point in the first location may be as simple as the mere appearance of the point at the second location; as long as no point of the graph 203 was selected, no particular point was displayed within the selection area, so the appearance of one tells the user that the displayed point represents the colour (see point 301), intensity (see point 302), or intensity grade (see box 303) of the selected point on the time axis 201. It is also advisable to use the same - or at least a similar - current point marker (like a small white circle) at all locations where parallel representations of the same points are shown, to ensure that the user understands these being parallel representations. Using an alternative expression, the method comprises highlighting the selected one of the plurality of points of the graph 203 and highlighting one or more locations in the selection area that coincide with the value stored in the point record of the selected one of said plurality of points.

At the same time it may be advantageous to utilize the fields within the various selection sub-areas to give additional information to the user about the selected point. In the example of fig. 3 this could mean using one or more fields within the colour window 205 to give the x and y coordinate values of the colour associated with point 301; using one or more fields within the colour window 205 to show a larger patch of the colour associated with point 301; and/or using one or more fields within the intensity window 207 to display the intensity grade associated with point 302 as a percentage.

The detected user input could alternatively have been a command to add a new point to said plurality of points and select the added point. The user can give such a command for example by selecting, from a drop-down menu at field 304, a command "add new point". In that case the step of defining a first location in terms of time and a second location in terms of at least one of said characteristics involves creating a new point record or taking into use one from a pool of unused point records. The time value to be stored in the new point record can be selected e.g. by adding a default increment to a time value of the last selected point or, if there was no last selected point, to the time value of the first point in the lighting effect (in case a completely new lighting effect is about to be created, with no existing points yet, the method may involve creating a default starting point at zero time and a default intensity like 0% or 100%). The values of intensity, colour, and/or colour temperature to be stored in the new point record can be set to some default values. Alternatively if selecting the time value places the new point between two existing points of the lighting effect, the values of intensity, colour, and colour temperature to be stored in the new point record can be set to some intermediate values of the intensity, colour, and colour temperature of said existing points.

The command to add a new point may also take the form of the user pointing at a particular location within the selection area or the graph 203 and giving a command, for example by clicking on a secondary button of a mouse, thus opening a pop-up menu, and selecting "add new point" from the pop-up menu, or by holding down a special key such as a CTRL key while clicking on a mouse button. As another example the user may just point at a particular location in the graphical illustration of a colour space 208 and click a mouse button, possibly holding down a special key such as a CTRL key at the same time. Also in this case the time value to be stored in the new point record can be selected by adding a default increment to a time value of the last selected point or, if there was no last selected point, to the time value of the first point in the lighting effect. However, since the command to add a new point was clearly bound to some specific value of a characteristic, it is advantageous to note the location within the selection area that the user pointed at and select the value of that characteristic appropriately. This way it is possible to e.g. compose a completely new lighting effect by moving the cursor around within the graphical illustration of a colour space 208, holding down the CTRL key, and repeatedly clicking a mouse button.

After the new point record has been created (or an unused point record was taken into use), the new point is displayed at the corresponding first location with respect to said time axis, and a point is displayed at the second location with respect to the selection area, along with an indication of the point at said second location being a parallel representation of the point at said first location. From there one the method may be the same as explained above with reference to selecting an existing point.

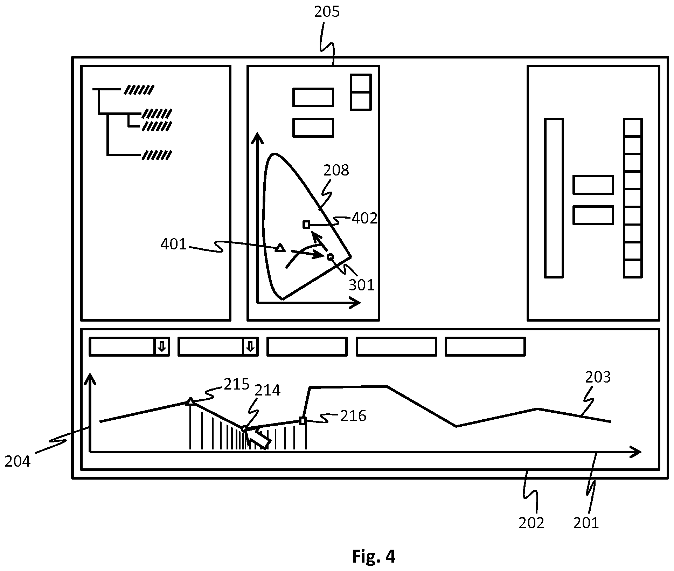

In order to make it easier for the user to perceive how the changes in other characteristics than intensity take place in the lighting effect, it may be advantageous to display more than one point at a time not only as vertices of the graph 203 but also within the selection area. Highlighting two or more points simultaneously might bring along the risk of confusion, but fig. 4 illustrates an advantageous way of avoiding it. Here the method comprises highlighting a point 215 of the graph 203 preceding the selected one 214 with a preceding point marker (here: a white triangle), and highlighting a point 216 of the graph 203 following the selected one 214 with a following point marker (here: a white square). The concepts of preceding and following are defined with respect to the time axis 201. The method comprises also highlighting a location 401 in the selection area with said preceding point marker, and highlighting a location 402 in the selection area with said following point marker. The highlighted location 301 in the selection area that corresponds to the selected point 214 is highlighted with a similar current point marker as the selected point 214. Additionally the illustrated embodiment of the method comprises displaying, within the selection area, a first arrow pointing from the preceding point marker to the current point marker, and a second arrow pointing from the current point marker to the following point marker.

In addition to or as an alternative to using different shapes for the preceding, current, and following point markers, different colours can be used. As an example, the current point marker may be white, the preceding point marker can be red, and the following point marker can be green. If more than one preceding points and/or more than one following points are highlighted, several options are possible. For example, the method can involve using a distinctive marker for each point of the graph and its parallel representation in the selection area; or using the same preceding point marker for all preceding points and the same following point marker for all following points; and/or the colour of the preceding and/or following point markers may fade in proportion to the separation from the selected point; or the like.

Although the practice of showing preceding point(s) and following point(s) has been shown in fig. 4 using the colour window 205 as an example, similar practices can be applied also in the colour temperature window 206 and/or the intensity window 207. However, since the graphical illustration of a colour space 208 is typically at least two-dimensional while the colour temperature picker 209 and intensity picker 211 are essentially one-dimensional, the two latter may become cluttered and difficult to read, at least if arrows between markers are also included.

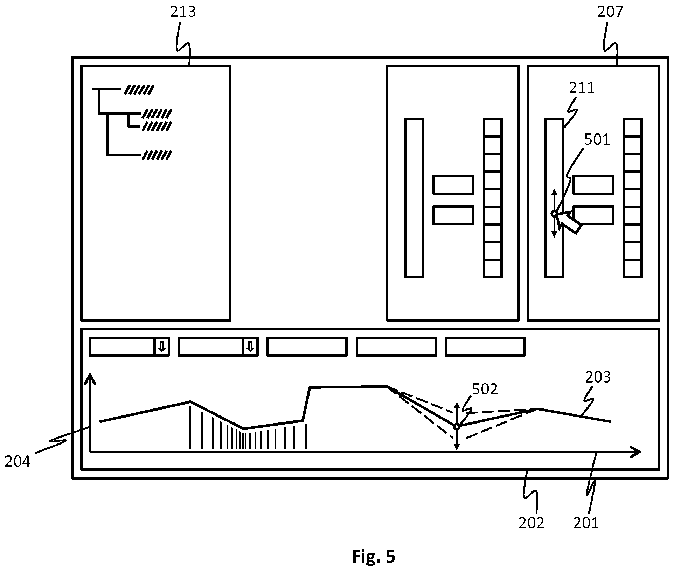

The bidirectional user interface, which not only displays graphical elements to the user but also detects user inputs, offers a wide variety of intuitive editing possibilities so that the user can use a mouse, arrow keys, and/or other input means to make changes to the lighting effect to be generated. Some examples are described in the following with reference to figs. 5 to 9.

Fig. 5 illustrates an example of a case where changes are made to the lighting effect as a response to a user input indicative of selecting a point at the so-called second location (i.e. within the selection area) and moving the selected point to a different location with respect to the selection area. In particular, in fig. 5 the user uses a pointer device such as a mouse to select and move a point 501 up or down within the intensity picker 211. Thus the method involves detecting user input that indicated moving the selected point 501 to a different location with respect to the intensity selection sub-area. The selected point 501 is the parallel representation of a particular vertex point 502 of the graph 203. The method then proceeds to updating the intensity value stored in the point record (not shown) of the point in question to reflect its new location within the intensity selection sub-area (i.e. the location within the intensity picker 211 to which point 501 was moved). In order to maintain the unambiguous correspondence between the vertex points of the graph 203 and their parallel representations within the selection area, the method also involves changing the perpendicular distance between the time axis 201 and the corresponding point 502 at the so-called first location (i.e. window 202) to reflect the updated intensity value.

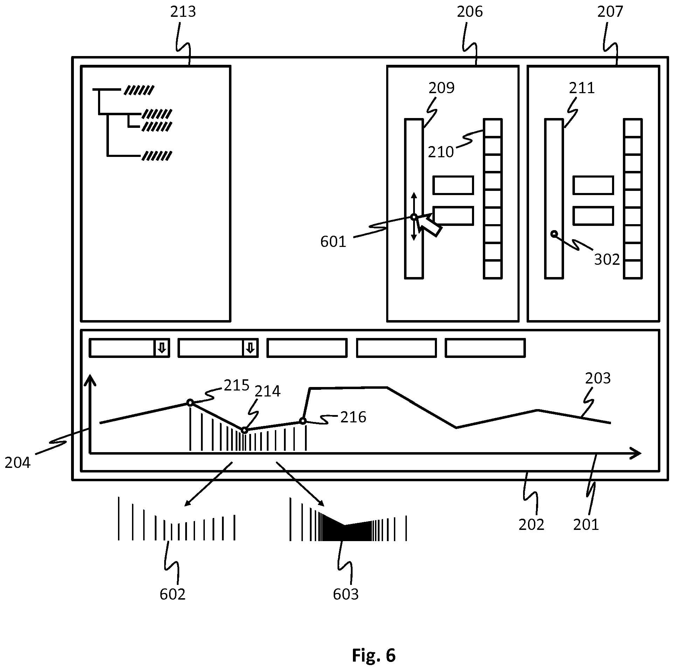

Fig. 6 illustrates a corresponding example where the user uses a pointer device such as a mouse to select and move a point 601 up or down within the colour temperature picker 209. Thus the method involves detecting user input that indicated moving the selected point 601 to a different location with respect to the colour temperature selection sub-area. The selected point 601 is the parallel representation of a particular vertex point 214 of the graph 203. The method then proceeds to updating the colour temperature value stored in the point record (not shown) of the point in question to reflect its new location within the colour temperature selection sub-area (i.e. the location within the colour temperature picker 209 to which point 601 was moved). Only changing colour temperature does not affect intensity, so the point 302 that constitutes the parallel representation of point 214 within the intensity selection sub-area does not move. In order to maintain the unambiguous correspondence between the indicator colours and the parallel representations of the vertex points of graph 203 within the selection area, the method also involves changing the indicator colour displayed between the point in question 214 of the graph 203 and its perpendicular projection on the time axis 201 to indicate the new colour temperature value.

Additionally the method involves automatically updating the fades of indicator colours between the changed indicator colour and the immediately preceding and following indicator colours. Reference designator 602 shows schematically the updated fades if the point 601 was moved in the direction of colour temperatures that are graphically represented with sparser hatching. Reference designator 603 shows schematically the updated fades if the point 601 was moved in the direction of colour temperatures that are graphically represented with denser hatching.

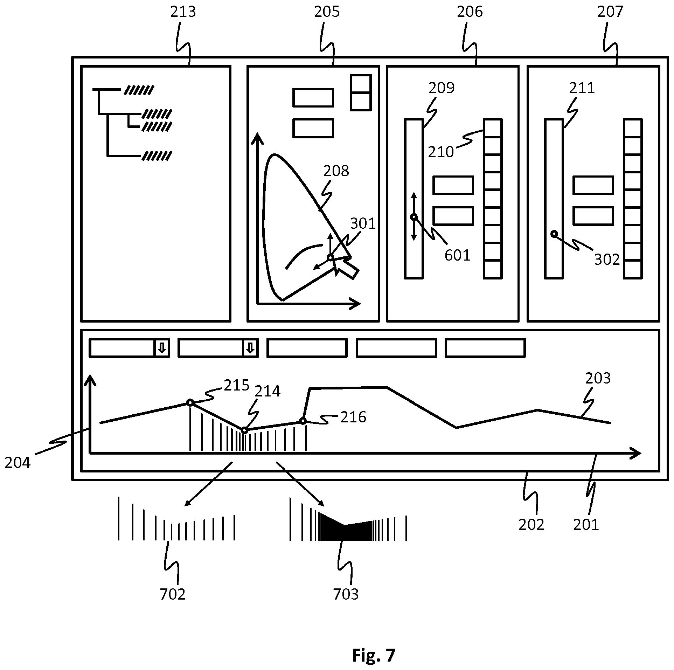

Fig. 7 illustrates a corresponding example where the user uses a pointer device such as a mouse to select and move a point 301 around within the graphical illustration of the colour space 208. Thus the method involves detecting user input that indicated moving the selected point 301 to a different location with respect to a colour selection sub-area. The selected point 301 is the parallel representation of a particular vertex point 214 of the graph 203. The method then proceeds to updating the colour value stored in the point record (not shown) of the point in question to reflect its new location within the colour selection sub-area (i.e. the location within the graphical illustration of the colour space 208 to which point 301 was moved). Only changing colour does not affect intensity, so the point 302 that constitutes the parallel representation of point 214 within the intensity selection sub-area does not move. However, if the point 301 was originally on the Planckian locus and thus represented white light, and was moved to a different point on the Planckian locus to represent white light of different colour temperature, its parallel representation 601 within the colour temperature picker 209 is moved to represent the new colour temperature.

In order to maintain the unambiguous correspondence between the indicator colours and the parallel representations of the vertex points of graph 203 within the selection area, the method also involves changing the indicator colour displayed between the point in question 214 of the graph 2013 and its perpendicular projection on the time axis 201 to indicate the new colour value. Additionally the method involves automatically updating the fades of indicator colours between the changed indicator colour and the immediately preceding and following indicator colours. Reference designators 702 and 703 show schematically the updated fades if the point 301 was moved in the direction of colours that are graphically represented with sparser or denser hatching respectively.

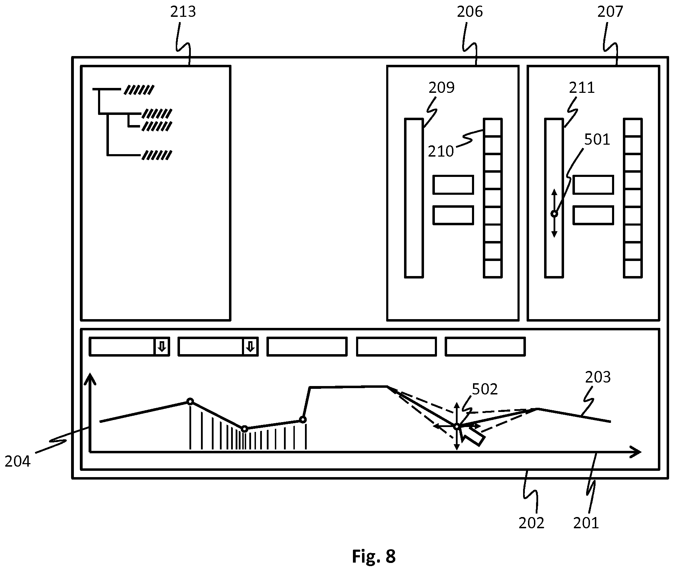

The user may also use a pointer device such as a mouse to select and move a point at the so-called first location, i.e. within window 202. An example is shown in fig. 8. As a response to a user input indicative of selecting a point 502 at said first location and moving the selected point to a different perpendicular distance from the time axis 201, the method involves updating the intensity value stored in the point record of the point in question to reflect its new distance from said straight line. Simultaneously the perpendicular distance between the time axis and the vertex point 502 at said first location is changed to reflect the updated intensity value; in other words the user sees the form of the graph 203 follow the movements of the moved vertex point. Additionally the method involves moving the corresponding point 501 at the second location to a new location with respect to the intensity selection sub-area to reflect the updated intensity value.

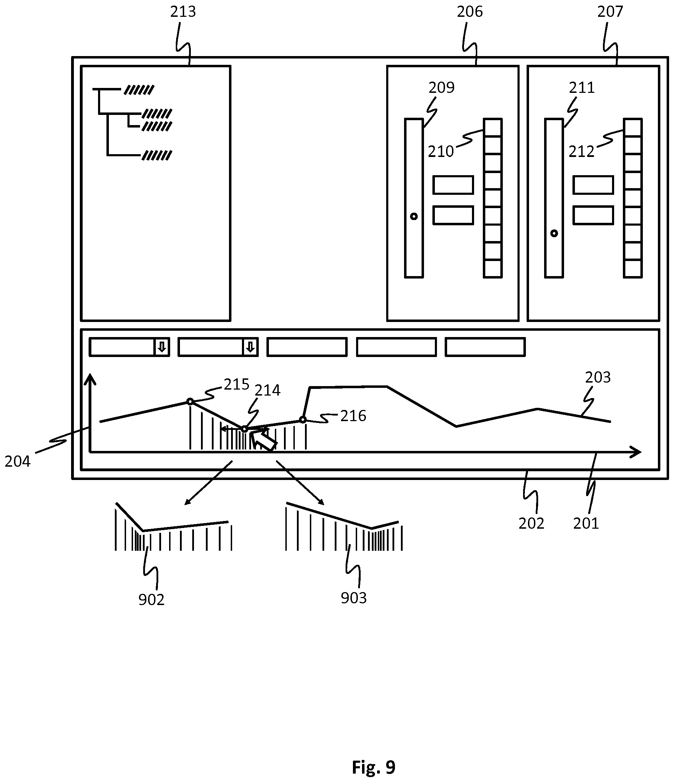

Another example of selecting and moving a point at its first location is shown in fig. 9. As a response to a user input indicative of selecting a point 214 at said first location and moving the selected point horizontally, i.e. in the direction of the time axis 201, the method involves updating the time value stored in the point record (not shown) of the point in question to reflect its new time coordinate value. Such moving does not cause changes in the parallel representation of the point in question within the selection area. However, the method involves updating the fades of indicator colours between the indicator colour of the changed point and the immediately preceding and following indicator colours. Reference designator 902 shows updated fades in the case where the point 214 was moved to an earlier instant of time. The fade between the preceding indicator colour and the indicator colour of point 214 becomes steeper, because the same absolute amount of change must be accomplished in a shorter time. Correspondingly the fade between the indicator colour of point 214 and the following indicator colour becomes more gentle. Reference designator 903 shows the updated fades in the contrary case. It is advantageous to place limits to how much the time value of the moved point can be changed this way; in particular it is advantageous to constrain point 214 in time so that it can't be moved earlier than point 215 or later than point 216. The method may implement such constraints by reading from memory not only the time value of the selected point but also the time values of the immediately preceding and following points and using the read time values to set up the appropriate limiting rules.

Advantageous embodiments of the method may involve automatically moving other vertex points of the graph 203 as a response to the user using a pointer device such as a mouse to select and move one vertex point. Some examples of such automatic moving are described in the following.

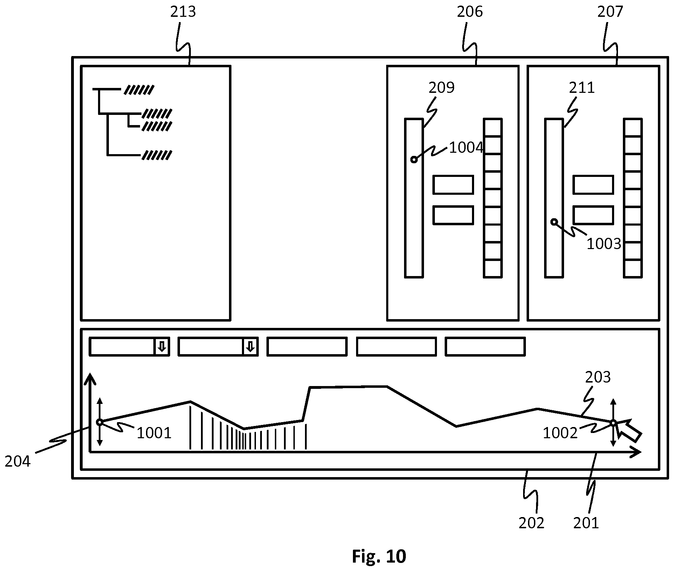

In the embodiment of fig. 10 the method comprises displaying two points 1001 and 1002 at corresponding different locations with respect to the time axis 201. In particular, the two displayed points are the first point 1001 and the last point 1002 of the graph 203, thus representing the characteristics of light at the beginning and end of the lighting effect to be generated respectively. In fig. 10 it is also assumed that the method comprises detecting a first user input indicative of a desire to link said two points. For example, the user may select an option "link first and last points" from a drop-down menu. An alternative way could be that the user first clicked a secondary mouse button at one point, which opened a pop-up menu, where one alternative is "select other point to link with". The user could select that alternative and then click at the other point to be linked. Another alternative way is that the user uses a pointer device such as a mouse to draw a selection window around those points that he wants to link, thus causing first all pertinent points to be selected, and then selects "link selected points" from a drop-down menu. Yet another alternative way of selecting two points is that the user first selects one point and then holds down a shift key or other key that signifies adding, and selects another point.

As a response to a detected second user input indicative of selection of one of said two points 1001 and 1002 and moving the selected point (in fig. 10: the last point 1002) with respect to the time axis 201, the method comprises displaying synchronized movements of the two points 1001 and 1002 with respect to the time axis 201. The displayed movements are naturally accompanied by updating correspondingly the values stored in the point records of the two points. Since the characteristics of light associated with the linked points are the same, parallel representations of the linked points 1001 and 1002 in the selection area are also the same, so they can be displayed; examples are point 1003 within the intensity picker 211 and point 1004 within the colour temperature picker 209. Linking the first and last points of the lighting effect in the way shown in fig. 10 is advantageous if the lighting effect is meant to run cyclically, so that when it ends it immediately begins anew.

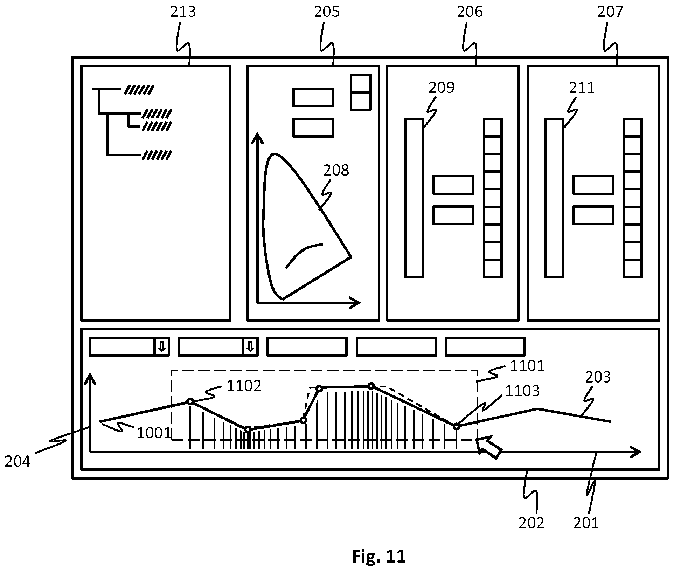

Fig. 11 illustrates another example of collectively moving vertex points of the graph 203. The procedure of fig. 11 is called colour normalisation or fade normalisation. At least three points are displayed at corresponding different locations with respect to the time axis 201. The user may for example use a pointer device such as a mouse to draw a selection window 1101 to select all those points that should be included in the colour normalisation, or select a number of points while holding down a shift key or other key that signifies adding. A feature of colour normalisation is that some part of the selection input by the user is interpreted as indicative of a desire to select those two of the at least three points as endpoints that are furthest from each other in the direction of the time axis. In fig. 11 these are points 1102 and 1103. Another user input is interpreted as indicative of a command to normalise colour shifts between all selected points. As a result, the method comprises displaying movements of all others of said at least three points than the selected endpoints to locations with respect to the time axis at which an absolute rate of colour change between each pair of consecutive points is constant. In the example of fig. 11 the fourth point within the selection window 1101 is moved slightly later in time and the fifth point slightly earlier in time, so that the rate of colour change (measured e.g. in xy-distance in the graphical representation of colour space 208 per unit of time, or in kelvins in the colour temperature picker 209 per unit of time) is the same.

The algorithm that defines the new locations in time for points that are subjected to colour normalisation may work as follows. A temporary table is made of all points that are affected, either by taking all points that the user explicitly selected or by first noting that the user selected two endpoints and then adding to the table all intermediate points on the time axis. The total distance in colour coordinates to be traversed in the colour space is calculated by adding together the distances between each pair of consecutive points on the time axis. The total distance is divided by the difference in time between the two endpoints to get the mean rate of colour change per unit time. The new distances in time between each pair of consecutive points are calculated by dividing the difference in colour coordinates between the points in question by the mean rate of colour change. Beginning from the first point, the new time coordinates of all subsequent points are obtained with a chained addition, each time adding the next calculated new distance in time between points. Once the new time coordinates have been stored in the corresponding point records, the points can be displayed, the segments of the graph between them can be drawn, and the colour fades between them can be updated in the coordinate system of window 202.

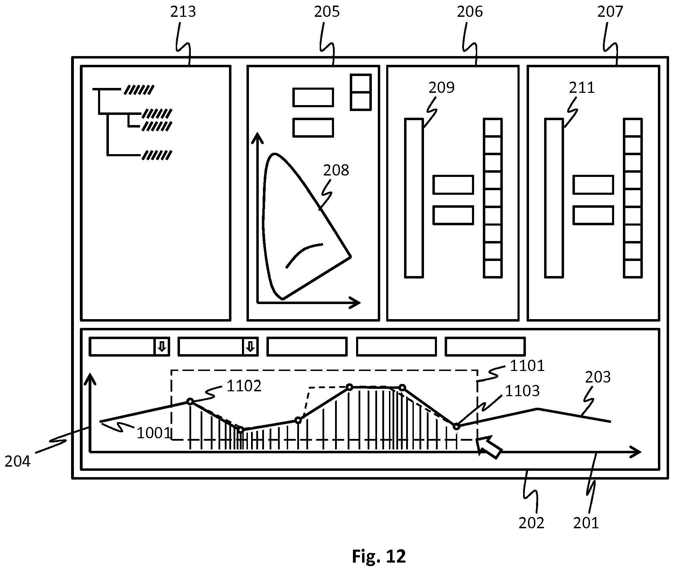

Fig. 12 illustrates another example of collectively moving vertex points of the graph 203. The procedure of fig. 12 is called time normalisation or interval normalisation. At least three points are displayed at corresponding different locations with respect to the time axis 201. Displaying and selecting points, including the endpoints 1102 and 1103 of the part of the graph 203 that is to be affected, can be made in the same way as above in the embodiment of fig. 11. As a response to a user input indicative of a command to normalize time differences, the method comprises displaying movements of all others of said at least three points than the selected endpoints 1102 and 1103 to locations with respect to the time axis 201 at which a distance in time between each pair of consecutive points is constant. Here, as well as in the embodiment of fig. 11, the fades must naturally be updated so that the indicator colours themselves remain the same but the fades between them are adapted to the new locations in time of the points.

The algorithm that defines the new locations in time for points that are subjected to time normalisation may work as follows. A temporary table is made of all points that are affected, either by taking all points that the user explicitly selected or by first noting that the user selected two endpoints and then adding to the table all intermediate points on the time axis. The total difference in time between the two endpoints is calculated by simple subtraction of their time coordinates. The total difference is divided by the number of points in the table minus one to get the mean difference between two consecutive points. Beginning from the first point, the new time coordinates of all subsequent points are obtained with a chained addition, each time adding the calculated mean distance in time. Once the new time coordinates have been stored in the corresponding point records, the points can be displayed, the segments of the graph between them can be drawn, and the colour fades between them can be updated in the coordinate system of window 202.

A lighting effect that is created and edited according to embodiments of the methods described above is eventually aimed to be generated with light sources of a lighting system, for example a lighting system controlled by a router as in fig. 1. Therefore an eventual description of the lighting effect should consist of machine-readable instructions that can be loaded from the computer to the memory of the router and executed. However, advantages can be gained by storing a description of the lighting effect also in human-readable form. This can be achieved by using a markup language to store the description of the lighting effect, because markup languages are by definition both human-readable an machine-readable. One advantage of storing the description of the lighting effect in human-readable form is that a lighting designer who knows the system very well can use even a very basic text editor to view and even edit a previously created lighting effect, without having access to a specialized lighting effect design program such as the one capable of producing the display views and setting up a bidirectional graphical user interface as described above.

Thus according to an advantageous embodiment the method may comprise responding to the detection of a user input indicative of a save command by storing a description of the lighting effect in the form of a file of a markup language. Similarly the method may comprise responding to the detection of a user input indicative of a load command by reading from a file of a markup language a description of a lighting effect and displaying the corresponding lighting effect in accordance with what has been described earlier.

According to an advantageous embodiment a lighting effect can be generated also by direct execution of machine-readable instructions by the same computer that was used to create or edit a lighting effect or to upload a lighting effect to the router. Referring briefly back to fig. 1, a lighting designer operating a computer that is coupled to the router 101 (for example directly, or through the Ethernet hub 107, or additionally through a wide area network 109) may use the computer and the router 101 to directly control the drivers 105 and 106 of light sources, so that commands transmitted by the computer cause immediate changes in the produced lighting. This kind of functionality can be utilized to implement a test mode, in which the lighting designer who is still present in or close to the space to be illuminated allows a lighting effect to be run in order to check, how it looks like in reality.

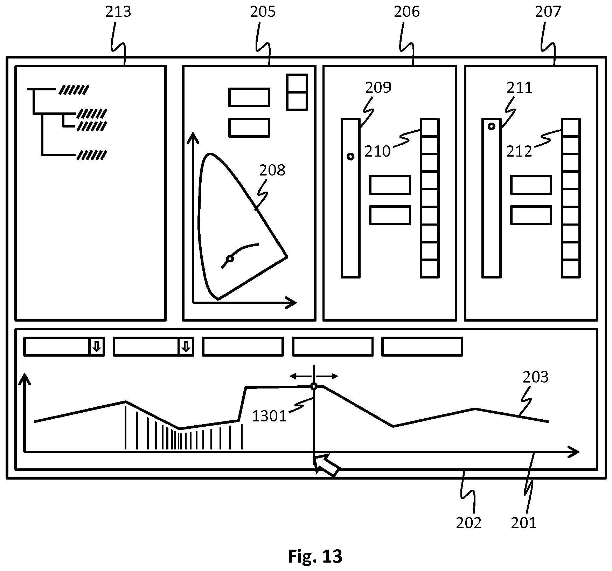

Fig. 13 illustrates some advantageous aspects of an embodiment of a method that allows using test mode. As a response to detecting a user input indicative of a test command, the method comprises executing the machine-readable instructions that lead to the generation of the lighting effect within a test time that is different than a time indicated by the time axis. Typically the lighting designer wants the test time to be shorter than a time indicated by the time axis, so that in test mode the whole lighting effect is walked through within a relatively short time compared to what its generation should actually take. The test time may be a predefined, constant duration of time like 15 seconds or one minute, or the lighting designer may be allowed to enter a desired length for the test time.

Instead of running the test mode in connection to an actual lighting system, the method may comprise displaying a simulated environment in which the light sources of the actual lighting system are emulated by areas of an electronic display. The simulated environment may be displayed for example in an additional window of the same display on which the user interface is also otherwise displayed, or on one or more additional displays coupled to the same computer. In a simple embodiment the simulated environment may consist simply of as many coloured dots or patches of a display as there are light sources in the actual lighting system. According to a more elaborated approach the simulated environment may offer a simulated 3D view to a room or building, created for example with CAD (computer aided design) software, with simulated lighting effects that mimic the actual lighting of the designed space as closely as possible.

As shown in fig. 13, the method may comprise displaying a current time cursor 1301 at a position of the time axis 201. During the execution of the machine-readable instructions that lead to the generation of the lighting effect, either in real time or within said test time, the method may comprise displaying a movement of the current time cursor 1301 from a beginning of the time axis 201 along the time axis towards the end of the time axis, so that the lighting designer can follow, at which point does the execution proceed. As a response to detecting a user input indicative of moving the current time cursor 1301, for example by clicking the current time cursor 1301 with a mouse and dragging it in the horizontal direction, the method may comprise changing the execution of the machine-readable instructions that lead to the generation of the lighting effect to correspond to a position of the time axis 201 to which the current time cursor 1301 is moved. This way the lighting designer may for example easily repeat generating a particularly interesting part of the lighting effect, or skip over parts of the lighting effect that are not currently of interest.

As the execution proceeds, it may be advantageous to constantly update the position of a displayed point within at least one of the graphical illustration of colour space 208, colour temperature picker 209, and/or the intensity picker 211, so that at each moment the location of such displayed point(s) follows the colour, colour temperature, and/or intensity value(s) associated with the point at which the current time cursor 1301 intersects the graph 203.

In all embodiments of the method the time axis 201 may indicate the proceeding of the lighting effect either in absolute time or in relative time. Absolute time means that hours and minutes shown on the time axis 201 are actually the hours and minutes of the day, so that e.g. a 24 hours lighting effect that comprises increasing light intensity from 0% to 100% beginning at 07:00 will actually cause brightening of the lights to begin at 7:00 AM every morning. Relative time means that the hours and minutes shown on the time axis 201 indicate hours and minutes after some triggering event that puts the lighting effect running. A triggering event can be for example a signal from a sensor, or the operating of a switch, or the simultaneous fulfilling of two or more triggering conditions. A kind of a triggering event may even be the ending of the execution of a previous lighting effect, so that a lighting effect will begin immediately after the previous one. The previous lighting effect may even be a previous instance of the same lighting effect, so that one and the same lighting effect may be repeated continuously.

Any embodiment of the method may comprise responding to a user input indicative of giving a priority value to a lighting effect by storing such a priority value in association with the lighting effect, for example as a part of an effect record or other composition of data that is common to the whole lighting effect. Priority values are a practical way of arranging the execution of multiple lighting effects in various combinations. As an example, there may be a 24 hours lighting effect with low priority that repeats itself continuously to illuminate certain premises with a default lighting scheme. Additionally there may be one or more accentuating lighting effects with higher priority that are arranged to run in relative time for a certain period after a triggering event. Whenever such a triggering event occurs, the accentuating lighting effect begins and executes until its end, after which the basic 24 hours lighting effect continues as if it had been running all the time. In other words, the accentuating lighting effect takes control for its own duration, if the appropriate triggering event happens to take place at any time, but otherwise the 24 hour cycle of lighting follows its regular course. More elaborate alternating lighting effects can be composed by allowing three or more priority levels, so that it is always the active lighting effect with highest priority that actually says how the lighting will look like. As another example, two lighting effects can be created, one of them only concerning intensity and the other only concerning colour or colour temperature. For the duration when one overrides the other, control of the lighting is changed to concern only that characteristic of light concerned by the overriding lighting effect.

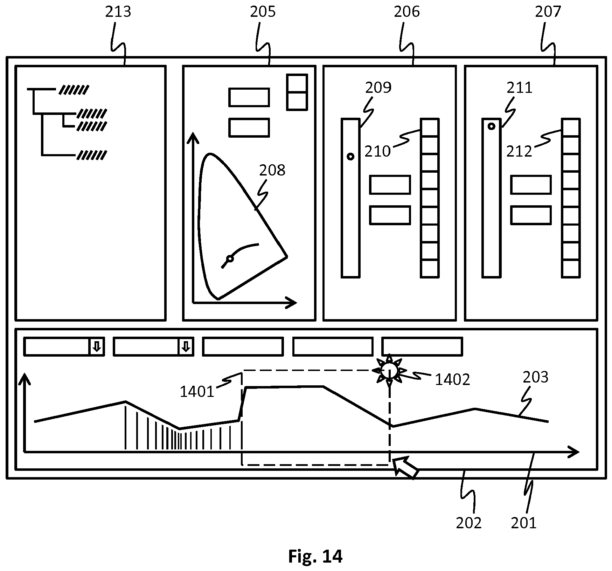

A special case of an "effect" having higher priority and thus the capability of overriding (or at least modifying) an otherwise executing lighting effect may be the output of a presence sensor, daylight sensor, or other detection device used to detect a condition that by default does not occur similarly every day and thus would be difficult to take into account just by creating a regularly occurring lighting effect bound to the clock. As an example, a lighting intensity sensor may be installed in a space where the artificial lighting follows a particular lighting effect but which also receives natural daylight. The lighting intensity sensor detects the overall amount of light, which is a sum of the artificial and natural lighting levels. Daylight harvesting can be accomplished by not producing more artificial light than is necessary to achieve a certain target level of lighting intensity. This can be achieved with a specifically designed lighting effect for example in the following way, as illustrated in fig. 14.

In order to specify a part of the lighting effect as being dependent on the output of a lighting sensor, the user may make a corresponding selection for example from a drop-down menu and/or draw a daylight harvesting window 1401, which covers that part of the time axis 201 and the graph 203 that are to be affected and which may be displayed with a particular daylight harvesting symbol 1402. Alternatively the user may select the whole lighting effect and mark it as being dependent on the output of a lighting sensor. As a response to detecting a user input indicative of defining dependence on lighting sensor output, the method comprises storing the appropriate intensity values (those belonging to points of the graph 203 that were affected by the selection) in a conditional form, which instructs the executing device to only execute the intensity commands to the extent that is necessary to make a total intensity (that produced by the lighting effect plus that produced by ambient light) reach the intensity that was actually associated with the point in question.

Dependence on presence detection may follow a similar approach. The user may define a lighting effect or a part of it to depend on the output of a presence sensor. This instructs the executing device to only execute the intensity commands on the condition that a positive output has been obtained from a presence sensor within a time window of predetermined length preceding the time when the intensity command should be executed. Otherwise the lighting is dimmed to a low level or even switched completely off. A yet another alternative is to make the priority value of a brighter lighting effect dependent on the output of the presence sensor; then that lighting effect will only have higher priority - and thus will only override another lighting effect with significantly more modest intensity - if a positive output has been obtained from a presence sensor within a time window of predetermined length preceding the time when the latest priority comparison between the two lighting effects is made.

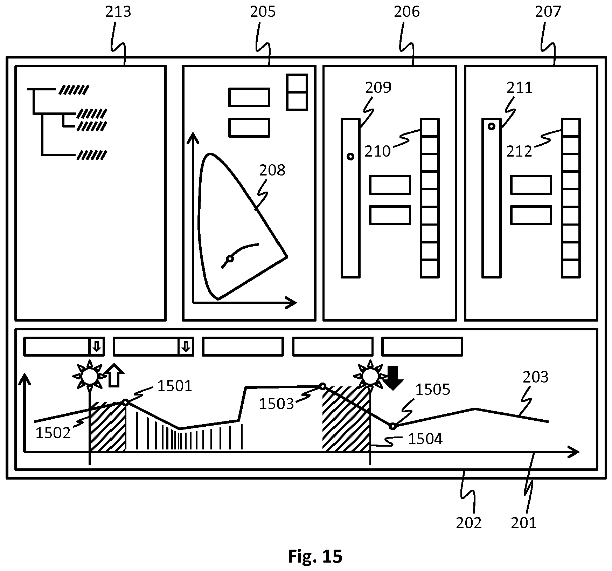

Any embodiment of the method may comprise utilizing the concept of relative points, meaning points that define the lighting effect and that have a time value defined with a relation to some other time value. Using relative points can be described defining what has been called the "first location" as a relative location at a particular distance in the time direction from a reference point in time, and deriving the location of said reference point in time from one or more predefined criteria. Examples of the use of relative points are discussed in the following with reference to fig. 15.

In the lighting effect illustrated in fig. 15 point 1501 is a relative point: its "first location" (i.e. location with reference to the time axis 201 in window 202) is defined as a relative location at a particular distance in the time direction from a reference point 1502 in time. The location in time of the reference point 1502 is defined as the time of sunrise on the day of the year on which the lighting effect is to be executed. Thus the concept of one or more predefined criteria named above comprises a calendar entry indicative of the timing of sunrise on a particular day of the year.

The point 1501 may have been defined as a relative point in relation to sunrise time for example by selecting the point and then selecting an entry from a drop-down menu, or by clicking a secondary mouse button when point 1501 has been selected and finding the appropriate entry from a pop-up menu. Selecting a menu entry "relative to sunrise" advantageously opens a further menu or entry window in which the user may enter the amount of time (as a positive or negative value) that should separate the point in question and its reference point. The method may comprise displaying the sunrise reference point 1502 with a particular symbol, and displaying a hatching or some other graphical symbol between the point in question and its reference point in order to remind the user of the relation.

In the lighting effect illustrated in fig. 15 point 1503 is an example of another relative point: its "first location" is defined as a relative location at a particular distance in the time direction from another reference point 1504 in time. The location in time of the reference point 1504 is defined as the time of sunset on the day of the year on which the lighting effect is to be executed. Thus the concept of one or more predefined criteria named above comprises here a calendar entry indicative of the timing of sunset on a particular day of the year.

The use of relative points may affect also other parts of the lighting effect than just the point in question; in particular it affects the changes in light characteristics that precede and/or follow the relative point. For example in the lighting effect of fig. 15 the continuous decrease in lighting intensity from point 1503 to point 1505 will take a shorter or longer time, and thus be steeper or more gentle, depending on the timing of the reference point 1504 that marks the sunset. For this reason a lighting controller (also referred to as a router), or other controlling device that begins executing machine-readable instructions with the aim of generating the corresponding lighting effect may advantageously begin by checking the lighting effect for the appearance of relative points, then reading a description of the appropriate criteria (like the calendar entries indicative of the timing of sunrise and/or sunset on that particular day) and then figuring out the actual form of the lighting effect with the criteria taken into account.

A user who has the objective of designing a coloured lighting effect may face a situation in which the available lighting arrangement does not have colour rendering capability required for all colours that the user would like to see. In order to avoid disappointment and confusion, the step of displaying a selection area in any embodiment of the method may comprise reading, from a memory, a description of colour rendering capabilities of a lighting arrangement, and only displaying colours within the selection area that according to said description are capable of being rendered by the lighting arrangement. Such a helpful feature can be called restrictive colour gamut handling. The user sees only those colours within the selection area that the actual lighting arrangement is capable of reproducing. The computer may read the description of the colour rendering capabilities from its own memory, or it may send a request to the router or other controlling device of the lighting arrangement to disclose the colour rendering capabilities before the user is allowed to make any colour selections within the selection area.

Any embodiment of the invention may comprise a functionality of compressing and/or expanding the time scale of a lighting effect. Compressing and expanding mean collectively changing the length of time that it will take for the whole lighting effect to execute once. Examples of how compressing and/or expanding may be achieved include, but are not limited to, the following:
- Moving the last point only: the user may select the last (the rightmost) point of the graph 203 and move it horizontally to a different location in time. All other points remain at their original locations. This will cause changes only in the intensity fades and/or colour fades and/or colour temperature fades between the last and second last points in the graph 203.
- Moving all but the first point: the user gives an input indicative of a desire to time scaling, and selects and moves any point of the graph 203 but the first one in horizontal direction. This will cause changes only in the intensity fades and/or colour fades and/or colour temperature fades between the first and second points in the graph 203. The mutual relations of all other points remain the same; they just move along in the direction of the time axis.
- Moving a block of points: the user gives an input indicative of a desire to time scaling, and draws a selection window that includes one or more points in addition to an extremity (beginning or end) point of the graph. The time interval between the pair of points at the borderline between the selected and unselected points is the one to contract or expand. Also the intensity fades and/or colour fades and/or colour temperature fades between said two points change accordingly.
- Proportionally scaling the whole lighting effect: the user gives an input indicative of a desire to time scaling and another input indicative of selecting a point at an extremity of said graph and moving the selected point in the direction of said time axis. The method then comprises jointly moving all points of the graph in the direction of the time axis by amounts proportional to the original distances between said points in the direction of the time axis, thus maintaining the relative distances between said points in the direction of the time axis.

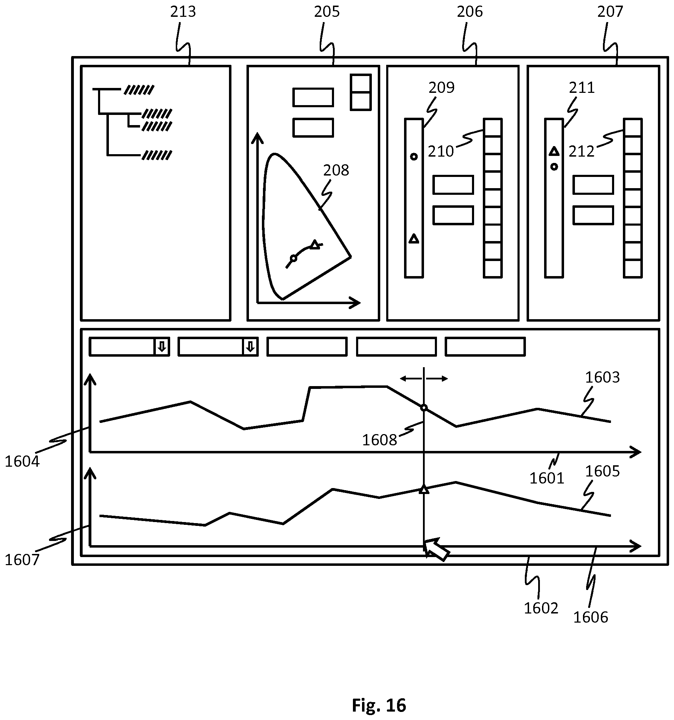

Any embodiment of the invention may comprise displaying representations of two or more lighting effects as respective graphs along the time axis. Fig. 16 illustrates an exemplary embodiment, in which the window 1602 comprises two time/intensity coordinate systems displayed so that the time units on their time axes 1601 and 1606 coincide vertically. The lighting effect represented by the upper graph 1603 may be aimed for generation with a first set of light sources, and the lighting effect represented by the lower graph 1605 may be aimed for generation with a second set of light sources. Each graph 1603 and 1605 is here displayed in its own coordinate system having a time axis 1601, 1606 and an intensity axis 1604, 1607 of its own, but the graphs could quite as well be displayed in a common coordinate system. A common current time cursor 1608 can be displayed, and the user may give an input indicative of a test command, with the result that moving the current time cursor 1608 in the horizontal direction causes (simulated or actual) generation of that point of both lighting effects that each time corresponds to the location of the current time cursor 1608.

As illustrated in fig. 16 it may be advantageous to use, within the selection area, different symbols for the parallel representations of the points of both graphs coinciding with the current time cursor 1608. In fig. 16 a circle is used to represent the actual point of the upper lighting effect and a triangle is used to represent the actual point of the lower lighting effect.

The user may edit any of the simultaneously displayed lighting effects, using any of the editing functions that have been described earlier. Additionally there may be editing functions that are specific to displaying two or more lighting effects simultaneously, like aligning points of two or more lighting effects with respect to any characteristic of light (time, intensity, colour, colour temperature); copying a point from one lighting effect and pasting it to another with similar values of light characteristics; jointly moving two or more points selected from different lighting effects, and the like.

Everything that has been said above concerning embodiments of the invention as methods can be generalized to embodiments of the invention as computer programs. Namely, the computer and the router are programmable electronic devices, and a computer program stored in a non-volatile medium like a memory circuit comprises machine-readable instructions which, when executed by one or more processors, cause the implementation of the corresponding method.

The computer and the router of the lighting system are examples of programmable electronic devices according to device-type embodiments of the invention. An electronic device according to an embodiment of the invention is a programmable device programmed to implement a method of the kind described above.

The exemplary embodiments described above do not constitute an exhaustive or limiting description of the scope of protection defined by the appended claims, but variations and modifications are possible. For example, although all windows of the graphical user interface are shown in figs. 2 to 16 as being displayed simultaneously, the user interface may comprise means for alternating the displaying of windows. This is useful in particular when the actual display screen of the device is small, and displaying all windows simultaneously would make the windows inconveniently small to read.

## Claims

1. A method for displaying, through a user interface (124, 125, 126) of a computer (108), to a user of said computer (108), a feature of a lighting effect to be generated in the form of machine-readable instructions executable by a lighting controller (101), wherein said lighting effect involves change over time in at least one of: intensity, colour temperature, colour; the method comprising:
- displaying a time axis (201) on a display (124) of said user interface (124, 125, 126) of said computer (108), and displaying a representation of said lighting effect as a graph (203) along said time axis (201) on said display (124),
- displaying a selection area (205, 206, 207) on said display (124) separately from said time axis (201), said selection area (205, 206, 207) representing characteristics of light that comprise intensity and zero, one, or two of: colour temperature, colour,
**characterized in that** the method comprises
- as a response to a user input that said computer (108) received through said user interface (125, 126), defining a first location with respect to said time axis and a second location with respect to said selection area (205, 206, 207), and
- displaying a point (214, 215, 216, 502, 1001, 1002, 1102, 1103, 1501, 1503, 1505) at said first location with respect to said time axis (201), and a point (301, 302, 401, 402, 501, 601, 1003, 1004) at said second location with respect to said selection area (205, 206, 207), along with an indication of the point at said second location being a parallel representation of the point at said first location.

2. A method according to claim 1, wherein:
- the method comprises storing, for each of a plurality of points (214, 215, 216, 502, 1001, 1002, 1102, 1103, 1501, 1503, 1505) of said graph (203), a respective point record that associates a respective point of each of said plurality of points with a respective value of at least one of said characteristics,
- said user input is one of: an expression of selecting one of said plurality of points (214, 215, 216, 502, 1001, 1002, 1102, 1103, 1501, 1503, 1505), or a command to add a new point to said plurality of points and select the added point, and
- the step of displaying a point (214, 215, 216, 502, 1001, 1002, 1102, 1103, 1501, 1503, 1505) at said first location with respect to said time axis (201) and a point (301, 302, 401, 402, 501, 601, 1003, 1004) at said second location with respect to said selection area (205, 206, 207) comprises highlighting the selected one of said plurality of points of said graph (203) and highlighting a location in said selection area (205, 206, 207) that coincides with the value stored in the point record of the selected one of said plurality of points.

3. A method according to claim 2, comprising:
- highlighting a point (215) of said graph (203) preceding the selected one (214) with a preceding point marker, and highlighting a point (216) of said graph (203) following said selected one (214) with a following point marker, where preceding and following are defined with respect to said time axis (201), and
- highlighting a location (401) in said selection area (205) with said preceding point marker, and highlighting a location (402) in said selection area (205) with said following point marker.

4. A method according to claim 3, wherein:
- the highlighted location (301) in said selection area (205) is highlighted with a similar current point marker as the selected one (214) of said plurality of points of said graph (203), and
- the method comprises displaying, within said selection area (205), a first arrow pointing from the preceding point marker to the current point marker, and a second arrow pointing from the current point marker to the following point marker.

5. A method according to any of claims 2 to 4, wherein:
- the method comprises storing, for the lighting effect to be generated, an effect record that associates the lighting effect with one, two, or three of said characteristics of light, and
- the step of displaying a selection area (205, 206, 207) comprises only showing that or those of
- an intensity selection sub-area (207),
- a colour temperature selection sub-area (206), and
- a colour selection sub-area (205)
that match a corresponding characteristic in said effect record.

6. A method according to any of claims 2 to 5, comprising:
- displaying said time axis (201) as a straight line, and displaying each of the plurality of points (214, 215, 216, 502, 1001, 1002, 1102, 1103, 1501, 1503, 1505) of said graph (203) at a perpendicular distance from said straight line that is proportional to the magnitude of an intensity value stored in the respective point record of the respective point,
- displaying, between each of said plurality of points (214, 215, 216, 502, 1001, 1002, 1102, 1103, 1501, 1503, 1505) and its perpendicular projection on said straight line, an indicator colour indicative of one of
- a colour temperature value or
- a colour value
stored in the respective point record of the respective point, and
- displaying, within an area between the displayed indicator colours of two consecutive points (214, 215, 216, 502, 1001, 1002, 1102, 1103, 1501, 1503, 1505) of said graph (203), a fade from one of said displayed indicator colours to the other.

7. A method according to claim 6, comprising:
- as a response to a user input indicative of selecting a point (301, 501, 601) at said second location and moving the selected point (301, 501, 601) to a different location with respect to said selection area (205, 206, 207),
- if said user input indicated moving the selected point (501) to a different location with respect to an intensity selection sub-area (207), updating the intensity value stored in the point record of the selected point to reflect its new location within the intensity selection sub-area (207), and changing the perpendicular distance between said straight line and the corresponding point (502) at said first location to reflect the updated intensity value,
- if said user input indicated moving the selected point (601) to a different location with respect to a colour temperature selection sub-area (206), updating the colour temperature value stored in the point record of the selected point to reflect its new location within the colour temperature selection sub-area (206), changing the indicator colour displayed between the selected point of the graph (203) and its perpendicular projection on the straight line to indicate the new colour temperature value, and updating the fades (602, 603) of indicator colours between the changed indicator colour and the immediately preceding and following indicator colours, and
- if said user input indicated moving the selected point (301) to a different location with respect to a colour selection sub-area (205), updating the colour value stored in the point record of the selected point to reflect its new location within the colour selection sub-area (205), changing the indicator colour displayed between the selected point of the graph (203) and its perpendicular projection on the straight line to indicate the new colour value, and updating the fades (702, 703) of indicator colours between the changed indicator colour and the immediately preceding and following indicator colours.

8. A method according to any of claims 6 or 7, comprising:
- as a response to a user input indicative of selecting a point (502) at said first location and moving the selected point to a different perpendicular distance from said straight line,
- updating the intensity value stored in the point record of the selected point to reflect its new distance from said straight line,
- changing the perpendicular distance between said straight line and the corresponding point (502) at said first location to reflect the updated intensity value, and
- moving the corresponding point (501) at the second location to a new location with respect to the intensity selection sub-area (207) to reflect the updated intensity value.

9. A method according to any of the preceding claims, comprising:
- displaying two points (1001, 1002) at corresponding different locations with respect to said time axis (201),
- as a response to a first user input indicative of a desire to link said two points (1001, 1002) and to a second user input indicative of selection of one of said two points and of moving the selected point with respect to said time axis, displaying synchronized movements of said two points (1001, 1002) with respect to said time axis (201).

10. A method according to any of the preceding claims, comprising:
- displaying three or more points at corresponding different locations with respect to said time axis (201),
- as a response to a third user input indicative of a desire to select those two (1102, 1103) of said three or more points as endpoints that are furthest from each other in the direction of the time axis (203), and to a fourth user input indicative of a command to normalize colour shifts, displaying movements of all others of said three or more points than the selected two (1102, 1103) to locations with respect to said time axis (203) at which an absolute rate of colour change between each pair of consecutive ones of said three or more points is constant.

11. A method according to any of the preceding claims, comprising:
- displaying three or more points at corresponding different locations with respect to said time axis (201),
- as a response to a fifth user input indicative of a desire to select those two (1102, 1103) of said three or more points as endpoints that are furthest from each other in the direction of the time axis (201), and to a sixth user input indicative of a command to normalize time differences, displaying movements of all others of said three or more points than the selected two (1102, 1103) to locations with respect to said time axis (201) at which a distance in time between each pair of consecutive ones of said three or more points is constant.

12. A method according to any of the preceding claims, comprising:
- as a response to detecting a user input indicative of a save command that said computer (108) received through said user interface (125, 126), storing a description of the lighting effect in the form of a file of a markup language, and
- as a response to detecting a user input indicative of a load command that said computer (108) received through said user interface (125, 126), reading from a file of a markup language a description of a lighting effect and displaying the corresponding lighting effect.

13. A method according to any of the preceding claims, comprising:
- as a response to detecting a user input indicative of a test command that said computer received through said user interface, executing machine-readable instructions that lead to the generation of the lighting effect within a test time that is different than a time indicated by the time axis (201).

14. A method according to claim 13, comprising:
- displaying a current time cursor (1301) at a position of said time axis (201),
- during the execution of the machine-readable instructions that lead to the generation of the lighting effect within said test time, displaying a movement of said current time cursor (1301) from a beginning of the time axis (201) along the time axis (201) towards an end of the time axis (201), and
- as a response to detecting a user input indicative of moving said current time cursor (1301), changing the execution of the machine-readable instructions that lead to the generation of the lighting effect to correspond to a position of said time axis (201) to which the current time cursor (1301) is moved.

15. A method according to any of the preceding claims, comprising:
- defining said first location as a relative location at a particular distance in the time direction from a reference point (1502, 1504) in time, and
- deriving the location of said reference point (1502, 1504) in time from one or more predefined criteria.

16. A method according to claim 15, wherein said reference point (1502, 1504) is one of sunrise or sunset, and said one or more predefined criteria comprise a calendar entry indicative of the timing of said one of sunrise or sunset on a particular day of the year.

17. A method according to any of the preceding claims, wherein the step of displaying a selection area comprises
- reading from a memory (122) a description of colour rendering capabilities of a lighting arrangement, and
- only displaying colours within said selection area (205, 206, 207) that, according to said description, are capable of being rendered by said lighting arrangement.

18. A method according to any of the preceding claims, comprising:
- as a response to detecting a seventh user input indicative of a desire to time scaling and an eighth user input indicative of selecting a point at an extremity of said graph (203) and moving the selected point in the direction of said time axis (201), jointly moving all points of said graph (203) in the direction of said time axis (201) by amounts proportional to the original distances between said points in the direction of the time axis (201), thus maintaining the relative distances between said points in the direction of the time axis (201).

19. A method according to any of the preceding claims, comprising:
- displaying representations of two or more lighting effects as respective graphs (1603, 1605) along said time axis (1601, 1602).

## Patentansprüche

1. Verfahren zum Anzeigen, durch eine Benutzerschnittstelle (124, 125, 126) eines Computers (108), einem Benutzer des Computers (108), eines Merkmals eines zu erzeugenden Beleuchtungseffekts in Form von maschinenlesbaren Anweisungen, die durch eine Beleuchtungssteuerung (101) ausführbar sind, wobei der Beleuchtungseffekt eine Änderung mit der Zeit von mindestens einem von Folgendem zur Folge hat: Intensität, Farbtemperatur, Farbe; das Verfahren umfassend:
- Anzeigen einer Zeitachse (201) auf einer Anzeige (124) der Benutzerschnittstelle (124, 125, 126) des Computers (108) und Anzeigen einer Darstellung des Beleuchtungseffekts als ein Graph (203) entlang der Zeitachse (201) auf der Anzeige (124),
- getrenntes Anzeigen eines Auswahlbereichs (205, 206, 207) auf der Anzeige (124) von der Zeitachse (201), wobei der Auswahlbereich (205, 206, 207) Charakteristika von Licht darstellt, die Intensität und null, eins oder zwei von Folgendem umfassen: Farbtemperatur, Farbe, **dadurch gekennzeichnet, dass** das Verfahren Folgendes umfasst:
- als eine Reaktion auf eine Benutzereingabe, die der Computer (108) durch die Benutzerschnittstelle (125, 126) erhalten hat, Definieren eines ersten Orts in Bezug auf die Zeitachse und eines zweiten Orts in Bezug auf den Auswahlbereich (205, 206, 207), und
- Anzeigen eines Punkts (214, 215, 216, 502, 1001, 1002, 1102, 1103, 1501, 1503, 1505) an dem ersten Ort in Bezug auf die Zeitachse (201) und eines Punkts (301, 302, 401, 402, 501, 601, 1003, 1004) an dem zweiten Ort in Bezug auf den Auswahlbereich (205, 206, 207) zusammen mit einer Angabe des Punkts an dem zweiten Ort, die eine Parallelogrammdarstellung des Punkts an dem ersten Ort ist.

2. Verfahren nach Anspruch 1, wobei:
- das Verfahren Speichern, für jeden einer Mehrzahl von Punkten (214, 215, 216, 502, 1001, 1002, 1102, 1103, 1501, 1503, 1505) des Graphs (203), eines jeweiligen Punktdatensatzes umfasst, der einen jeweiligen Punkt jedes der Mehrzahl von Punkten mit einem jeweiligen Wert mindestens einer der Charakteristika in Verbindung bringt,
- die Benutzereingabe eins von Folgendem ist: ein Ausdruck des Auswählens eines der Mehrzahl von Punkten (214, 215, 216, 502, 1001, 1002, 1102, 1103, 1501, 1503, 1505), oder ein Befehl, um einen neuen Punkt zu der Mehrzahl von Punkten hinzuzufügen und den hinzugefügten Punkt auszuwählen, und
- der Schritt des Anzeigens eines Punkts (214, 215, 216, 502, 1001, 1002, 1102, 1103, 1501, 1503, 1505) an dem ersten Ort in Bezug auf die Zeitachse (201) und eines Punkts (301, 302, 401, 402, 501, 601, 1003, 1004) an dem zweiten Ort in Bezug auf den Auswahlbereich (205, 206, 207) Markieren des ausgewählten der Mehrzahl von Punkten des Graphs (203) und Markieren eines Orts in dem Auswahlbereich (205, 206, 207), der mit dem Wert übereinstimmt, der in dem Punktdatensatz des ausgewählten der Mehrzahl von Punkten gespeichert ist, umfasst.

3. Verfahren nach Anspruch 2, umfassend:
- Markieren eines Punkts (215) des Graphs (203), der dem ausgewählten (214) vorangeht, mit einem Vorgängerpunkt-Markierer, und Markieren eines Punkts (216) des Graphs (203), der auf den ausgewählten (214) folgt, mit einem Folgepunkt-Markierer, wobei Vorangehen und Folgen in Bezug auf die Zeitachse (201) definiert sind, und
- Markieren eines Orts (401) in dem Auswahlbereich (205) mit dem Vorgängerpunkt-Markierer und Markieren eines Orts (402) in dem Auswahlbereich (205) mit dem Folgepunkt-Markierer.

4. Verfahren nach Anspruch 3, wobei:
- der markierte Ort (301) in dem Auswahlbereich (205) mit einem ähnlichen Momentanpunkt-Markierer wie der ausgewählte (214) der Mehrzahl von Punkten des Graphs (203) markiert wird, und
- das Verfahren Anzeigen, innerhalb des Auswahlbereichs (205), eines ersten Pfeils, der von dem Vorgängerpunkt-Markierer zu dem Momentanpunkt-Markierer zeigt, und eines zweiten Pfeils, der von dem Momentanpunkt-Markierer zu dem Folgepunkt-Markierer zeigt, umfasst.

5. Verfahren nach einem der Ansprüche 2 bis 4, wobei:
- das Verfahren Speichern, für den zu erzeugenden Beleuchtungseffekt, eines Effektdatensatzes umfasst, der den Beleuchtungseffekt mit einer, zwei oder drei der Charakteristika von Licht in Verbindung bringt, und
- der Schritt des Anzeigens eines Auswahlbereichs (205, 206, 207) nur Zeigen jenes oder jener von
- einem Intensitätsauswahl-Unterbereich (207),
- einem Farbtemperaturauswahl-Unterbereich (206) und
- einem Farbauswahl-Unterbereich (205) umfasst, die mit einer entsprechenden Charakteristik in dem Effektdatensatz übereinstimmen.

6. Verfahren nach einem der Ansprüche 2 bis 5, umfassend:
- Anzeigen der Zeitachse (201) als eine Gerade und Anzeigen jedes der Mehrzahl von Punkten (214, 215, 216, 502, 1001, 1002, 1102, 1103, 1501, 1503, 1505) des Graphs (203) in einem senkrechten Abstand von der Geraden, der proportional zu der Größe eines Intensitätswerts ist, der in dem jeweiligen Punktdatensatz des jeweiligen Punkts gespeichert ist,
- Anzeigen, zwischen jedem der Mehrzahl von Punkten (214, 215, 216, 502, 1001, 1002, 1102, 1103, 1501, 1503, 1505) und dessen senkrechter Projektion auf der Geraden, einer Indikatorfarbe, die auf eins von
- einem Farbtemperaturwert oder
- einem Farbwert
der in dem jeweiligen Punktdatensatz des jeweiligen Punkts gespeichert ist, hinweist, und
- Anzeigen, innerhalb eines Bereichs zwischen den angezeigten Indikatorfarben zweier aufeinanderfolgender Punkte (214, 215, 216, 502, 1001, 1002, 1102, 1103, 1501, 1503, 1505) des Graphs (203), eines Übergangs von einer der angezeigten Indikatorfarben zu der anderen.

7. Verfahren nach Anspruch 6, umfassend:
- als eine Reaktion auf eine Benutzereingabe, die auf das Auswählen eines Punkts (301, 501, 601) an dem zweiten Ort und das Bewegen des ausgewählten Punkts (301, 501, 601) zu einem anderen Ort in Bezug auf den Auswahlbereich (205, 206, 207) hinweist,
- wenn die Benutzereingabe auf das Bewegen des ausgewählten Punkts (501) zu einem anderen Ort in Bezug auf einen Intensitätsauswahl-Unterbereich (207) hinwies, Aktualisieren des Intensitätswerts, der in dem Punktdatensatz des ausgewählten Punkts gespeichert ist, um dessen neuen Ort innerhalb des Intensitätsauswahl-Unterbereichs (207) wiederzuspiegeln, und Ändern des senkrechten Abstands zwischen der Geraden und dem entsprechenden Punkt (502) an dem ersten Ort, um den aktualisierten Intensitätswert wiederzuspiegeln,
- wenn die Benutzereingabe auf das Bewegen des ausgewählten Punkts (601) zu einem anderen Ort in Bezug auf einen Farbtemperaturauswahl-Unterbereich (206) hinwies, Aktualisieren des Farbtemperaturwerts, der in dem Punktdatensatz des ausgewählten Punkts gespeichert ist, um dessen neuen Ort innerhalb des Farbtemperaturauswahl-Unterbereichs (206) wiederzuspiegeln, Ändern der Indikatorfarbe, die zwischen dem ausgewählten Punkt des Graphs (203) und dessen senkrechter Projektion auf der Geraden angezeigt ist, um den neuen Farbtemperaturwert anzuzeigen, und Aktualisieren der Übergänge (602, 603) von Indikatorfarben zwischen der geänderten Indikatorfarbe und der unmittelbar vorhergehenden und folgenden Indikatorfarbe, und
- wenn die Benutzereingabe auf das Bewegen des ausgewählten Punkts (301) zu einem anderen Ort in Bezug auf einen Farbauswahl-Unterbereich (205) hinwies, Aktualisieren des Farbwerts, der in dem Punktdatensatz des ausgewählten Punkts gespeichert ist, um dessen neuen Ort innerhalb des Farbauswahl-Unterbereichs (205) wiederzuspiegeln, Ändern der Indikatorfarbe, die zwischen dem ausgewählten Punkt des Graphs (203) und dessen senkrechter Projektion auf der Geraden angezeigt ist, um den neuen Farbwert anzuzeigen, und Aktualisieren der Übergänge (702, 703) von Indikatorfarben zwischen der geänderten Indikatorfarbe und der unmittelbar vorhergehenden und folgenden Indikatorfarbe.

8. Verfahren nach einem der Ansprüche 6 oder 7, umfassend:
- als eine Reaktion auf eine Benutzereingabe, die auf das Auswählen eines Punkts (502) an dem ersten Ort und Bewegen des ausgewählten Punkts zu einem verschiedenen senkrechten Abstand von der Geraden hinweist,
- Aktualisieren des Intensitätswerts, der in dem Punktdatensatz des ausgewählten Punkts gespeichert ist, um dessen neuen Abstand von der Geraden wiederzuspiegeln,
- Ändern des senkrechten Abstands zwischen der Geraden und dem entsprechenden Punkt (502) an dem ersten Ort, um den aktualisierten Intensitätswert wiederzuspiegeln, und
- Bewegen des entsprechenden Punkts (501) an dem zweiten Ort zu einem neuen Ort in Bezug auf den Intensitätsauswahl-Unterbereich (207), um den aktualisierten Intensitätswert wiederzuspiegeln.

9. Verfahren nach einem der vorhergehenden Ansprüche, umfassend:
- Anzeigen zweier Punkte (1001, 1002) an entsprechenden verschiedenen Orten in Bezug auf die Zeitachse (201),
- als eine Reaktion auf eine erste Benutzereingabe, die auf einen Wunsch hinweist, die zwei Punkte (1001, 1002) zu verknüpfen, und auf eine zweite Benutzereingabe, die auf eine Auswahl eines der zwei Punkte und Bewegen des ausgewählten Punkts in Bezug auf die Zeitachse hinweist, Anzeigen synchronisierter Bewegungen der zwei Punkte (1001, 1002) in Bezug auf die Zeitachse (201).

10. Verfahren nach einem der vorhergehenden Ansprüche, umfassend:
- Anzeigen dreier oder mehr Punkte an entsprechenden verschiedenen Orten in Bezug auf die Zeitachse (201),
- als eine Reaktion auf eine dritte Benutzereingabe, die auf einen Wunsch hinweist, jene zwei (1102, 1103) der drei oder mehr Punkte als Endpunkte auszuwählen, die am weitesten voneinander in der Richtung der Zeitachse (203) gelegen sind, und auf eine vierte Benutzereingabe, die auf einen Befehl hinweist, Farbverschiebungen zu normalisieren, Anzeigen von Bewegungen aller anderen der drei oder mehr Punkte als die ausgewählten zwei (1102, 1103) zu Orten in Bezug auf die Zeitachse (203), an denen eine absolute Farbänderungsrate zwischen jedem Paar aufeinanderfolgender der drei oder mehr Punkte konstant ist.

11. Verfahren nach einem der vorhergehenden Ansprüche, umfassend:
- Anzeigen dreier oder mehr Punkte an entsprechenden verschiedenen Orten in Bezug auf die Zeitachse (201),
- als eine Reaktion auf eine fünfte Benutzereingabe, die auf einen Wunsch hinweist, jene zwei (1102, 1103) der drei oder mehr Punkte als Endpunkte auszuwählen, die am weitesten voneinander in der Richtung der Zeitachse (201) gelegen sind, und auf eine sechste Benutzereingabe, die auf einen Befehl hinweist, Zeitunterschiede zu normalisieren, Anzeigen von Bewegungen aller anderen der drei oder mehr Punkte als die ausgewählten zwei (1102, 1103) zu Orten in Bezug auf die Zeitachse (201), an denen ein Zeitunterschied zwischen jedem Paar aufeinanderfolgender der drei oder mehr Punkte konstant ist.

12. Verfahren nach einem der vorhergehenden Ansprüche, umfassend:
- als eine Reaktion auf das Detektieren eine Benutzereingabe, die auf einen Sicherungsbefehl hinweist, die der Computer (108) durch die Benutzerschnittstelle (125, 126) erhalten hat, Speichern einer Beschreibung des Beleuchtungseffekts in Form einer Datei einer Auszeichnungssprache, und
- als eine Reaktion auf das Detektieren einer Benutzereingabe, die auf einen Ladebefehl hinweist, die der Computer (108) durch die Benutzerschnittstelle (125, 126) erhalten hat, Lesen einer Beschreibung eines Beleuchtungseffekts aus einer Datei einer Auszeichnungssprache und Anzeigen des entsprechenden Beleuchtungseffekts.

13. Verfahren nach einem der vorhergehenden Ansprüche, umfassend:
- als eine Reaktion auf das Detektieren einer Benutzereingabe, die auf einen Testbefehl hinweist, die der Computer durch die Benutzerschnittstelle erhalten hat, Ausführen von maschinenlesbaren Anweisungen, die zur Erzeugung des Beleuchtungseffekts innerhalb einer Testzeit führen, die von einer Testzeit verschieden ist, die durch die Zeitachse (201) angegeben wird.

14. Verfahren nach Anspruch 13, umfassend:
- Anzeigen eines Momentanzeit-Cursors (1301) an einer Position der Zeitachse (201),
- während der Ausführung der maschinenlesbaren Anweisungen, die zu der Erzeugung des Beleuchtungseffekts innerhalb der Testzeit führen, Anzeigen einer Bewegung des Momentanzeit-Cursors (1301) von einem Anfang der Zeitachse (201) entlang der Zeitachse (201) hin zu einem Ende der Zeitachse (201), und
- als eine Reaktion auf das Detektieren einer Benutzereingabe, die auf das Bewegen des Momentanzeit-Cursors (1301) hinweist, Ändern der Ausführung der maschinenlesbaren Anweisungen, die zur Erzeugung des Beleuchtungseffekts führen, um einer Position der Zeitachse (201) zu entsprechen, zu welcher der Momentanzeit-Cursor (1301) bewegt ist.

15. Verfahren nach einem der vorhergehenden Ansprüche, umfassend:
- Definieren des ersten Orts als ein relativer Ort in einem bestimmten Abstand in der Zeitrichtung von einem Referenzpunkt (1502, 1504) in der Zeit, und
- Ableiten des Orts des Referenzpunkts (1502, 1504) in der Zeit von einem oder mehreren vorgegebenen Kriterien.

16. Verfahren nach Anspruch 15, wobei der Referenzpunkt (1502, 1504) eins von einem Sonnenaufgang oder Sonnenuntergang ist, und das eine oder die mehreren vorgegebenen Kriterien einen Kalendereintrag umfassen, der auf die Zeiteinteilung des einen von dem Sonnenaufgang oder Sonnenuntergang an einem bestimmten Tag des Jahres hinweist.

17. Verfahren nach einem der vorhergehenden Ansprüche, wobei der Schritt des Anzeigens eines Auswahlbereichs Folgendes umfasst:
- Lesen einer Beschreibung von Farbwiedergabefähigkeiten einer Beleuchtungsanordnung aus einem Speicher (122), und
- Anzeigen nur der Farben innerhalb des Auswahlbereichs (205, 206, 207), die gemäß der Beschreibung geeignet sind, durch die Beleuchtungsanordnung wiedergegeben zu werden.

18. Verfahren nach einem der vorhergehenden Ansprüche, umfassend:
- als eine Reaktion auf das Detektieren einer siebten Benutzereingabe, die auf einen Wunsch nach Zeitskalierung hinweist, und einer achten Benutzereingabe, die auf das Auswählen eines Punkts an einem Ende des Graphs (203) und Bewegen des ausgewählten Punkts in der Richtung der Zeitachse (201) hinweist, gemeinsames Bewegen aller Punkte des Graphs (203) in der Richtung der Zeitachse (201) um Mengen, die zu den ursprünglichen Abständen zwischen den Punkten in der Richtung der Zeitachse (201) im Verhältnis stehen, wodurch die relativen Abstände zwischen den Punkten in der Richtung der Zeitachse (201) beibehalten werden.

19. Verfahren nach einem der vorhergehenden Ansprüche, umfassend:
- Anzeigen von Darstellungen zweier oder mehr Beleuchtungseffekte als jeweilige Graphen (1603, 1605) entlang der Zeitachse (1601, 1602).

## Revendications

1. Procédé permettant d'afficher, à travers une interface utilisateur (124, 125, 126) d'un ordinateur (108), pour un utilisateur dudit ordinateur (108), une particularité d'un effet d'éclairage à générer sous la forme d'instructions lisibles par machine et exécutables par un contrôleur d'éclairage (101), ledit effet d'éclairage impliquant une variation dans le temps d'au moins un élément parmi : l'intensité, la température de couleur, la couleur ; le procédé comprenant :
- l'affichage d'un axe de temps (201) sur un affichage (124) de ladite interface utilisateur (124, 125, 126) dudit ordinateur (108), et l'affichage d'une représentation dudit effet d'éclairage sous forme de graphique (203) selon ledit axe de temps (201) sur ledit affichage (124),
- l'affichage d'une zone de sélection (205, 206, 207) sur ledit affichage (124) séparément dudit axe de temps (201), ladite zone de sélection (205, 206, 207) représentant des caractéristiques de lumière qui comprennent l'intensité et zéro, un ou deux éléments parmi : la température de couleur, la couleur,
**caractérisé en ce que** le procédé comprend
- en réponse à une entrée utilisateur que ledit ordinateur (108) a reçu à travers ladite interface utilisateur (125, 126), la définition d'un premier emplacement par rapport audit axe de temps et d'un deuxième emplacement par rapport à ladite zone de sélection (205, 206, 207), et
- l'affichage d'un point (214, 215, 216, 502, 1001, 1002, 1102, 1103, 1501, 1503, 1505) audit premier emplacement par rapport audit axe de temps (201), et d'un point (301, 302, 401, 402, 501, 601, 1003, 1004) audit deuxième emplacement par rapport à ladite zone de sélection (205, 206, 207), avec une indication du point audit deuxième emplacement qui est une représentation parallèle du point audit premier emplacement.

2. Procédé selon la revendication 1, dans lequel :
- le procédé comprend le stockage, pour chacun d'une pluralité de points (214, 215, 216, 502, 1001, 1002, 1102, 1103, 1501, 1503, 1505) dudit graphique (203), d'un enregistrement de point respectif qui associe un point respectif de chacun de ladite pluralité de points à une valeur respective d'au moins l'une desdites caractéristiques,
- ladite entrée utilisateur est un élément parmi : une expression consistant à sélectionner l'un de ladite pluralité de points (214, 215, 216, 502, 1001, 1002, 1102, 1103, 1501, 1503, 1505), ou un ordre d'ajouter un nouveau point à ladite pluralité de points et de sélectionner le point ajouté, et
- l'étape de l'affichage d'un point (214, 215, 216, 502, 1001, 1002, 1102, 1103, 1501, 1503, 1505) audit premier emplacement par rapport audit axe de temps (201) et d'un point (301, 302, 401, 402, 501, 601, 1003, 1004) audit deuxième emplacement par rapport à ladite zone de sélection (205, 206, 207) comprend l'accentuation du point sélectionné de ladite pluralité de points dudit graphique (203) et l'accentuation d'un emplacement dans ladite zone de sélection (205, 206, 207) qui coïncide avec la valeur stockée dans l'enregistrement de point du point sélectionné de ladite pluralité de points.

3. Procédé selon la revendication 2, comprenant :
- l'accentuation d'un point (215) dudit graphique (203) précédant le point sélectionné (214) par un marqueur de point précédent, et l'accentuation d'un point (216) dudit graphique (203) suivant ledit point sélectionné (214) par un marqueur de point suivant, les points précédent et suivant étant définis par rapport audit axe de temps (201), et
- l'accentuation d'un emplacement (401) dans ladite zone de sélection (205) par ledit marqueur de point précédent, et l'accentuation d'un emplacement (402) dans ladite zone de sélection (205) par ledit marqueur de point suivant.

4. Procédé selon la revendication 3,
- l'emplacement accentué (301) dans ladite zone de sélection (205) étant accentué par un marqueur de point actuel similaire au point sélectionné (214) de ladite pluralité de points dudit graphique (203), et
- le procédé comprenant l'affichage, à l'intérieur de ladite zone de sélection (205), d'une première flèche pointant du marqueur de point précédent vers le marqueur de point actuel, et d'une deuxième flèche pointant du marqueur de point actuel vers le marqueur de point suivant.

5. Procédé selon l'une quelconque des revendications 2 à 4,
- le procédé comprenant le stockage, pour l'effet d'éclairage à générer, d'un enregistrement d'effet qui associe l'effet d'éclairage à une, deux ou trois desdites caractéristiques de lumière, et
- l'étape consistant à afficher une zone de sélection (205, 206, 207) comprenant le fait de montrer uniquement celle(s)
- d'une sous-zone de sélection d'intensité (207),
- d'une sous-zone de sélection de température de couleur (206), et
- d'une sous-zone de sélection de couleur (205) qui coïncide(nt) avec une caractéristique correspondante dans ledit enregistrement d'effet.

6. Procédé selon l'une quelconque des revendications 2 à 5, comprenant :
- l'affichage dudit axe de temps (201) comme une droite, et l'affichage de chacun de la pluralité de points (214, 215, 216, 502, 1001, 1002, 1102, 1103, 1501, 1503, 1505) dudit graphique (203) à une distance perpendiculaire de ladite droite qui est proportionnelle à la grandeur d'une valeur d'intensité stockée dans l'enregistrement de point respectif du point respectif,
- l'affichage, entre chacun de ladite pluralité de points (214, 215, 216, 502, 1001, 1002, 1102, 1103, 1501, 1503, 1505) et sa projection perpendiculaire sur ladite droite, d'une couleur d'indication indiquant un élément parmi
- une valeur de température de couleur ou
- une valeur de couleur
stockée dans l'enregistrement de point respectif du point respectif, et
- l'affichage, à l'intérieur d'une zone entre les couleurs d'indication affichées de deux points consécutifs (214, 215, 216, 502, 1001, 1002, 1102, 1103, 1501, 1503, 1505) dudit graphique (203), d'un fondu d'une desdites couleurs d'indication affichées à l'autre.

7. Procédé selon la revendication 6, comprenant :
- en réponse à une entrée utilisateur indiquant la sélection d'un point (301, 501, 601) audit deuxième emplacement et le déplacement du point sélectionné (301, 501, 601) vers un emplacement différent par rapport à ladite zone de sélection (205, 206, 207),
- si ladite entrée utilisateur indiquait le déplacement du point sélectionné (501) vers un emplacement différent par rapport à une sous-zone de sélection d'intensité (207), la mise à jour de la valeur d'intensité stockée dans l'enregistrement de point du point sélectionné pour refléter son nouvel emplacement à l'intérieur de la sous-zone de sélection d'intensité (207), et le changement de la distance perpendiculaire entre ladite droite et le point correspondant (502) audit premier emplacement pour refléter la valeur d'intensité mise à jour,
- si ladite entrée utilisateur indiquait le déplacement du point sélectionné (601) vers un emplacement différent par rapport à une sous-zone de sélection de température de couleur (206), la mise à jour de la valeur de température de couleur stockée dans l'enregistrement de point du point sélectionné pour refléter son nouvel emplacement à l'intérieur de la sous-zone de sélection de température de couleur (206), le changement de la couleur d'indication affichée entre le point sélectionné du graphique (203) et sa projection perpendiculaire sur la droite pour indiquer la nouvelle valeur de température de couleur, et la mise à jour des fondus (602, 603) des couleurs d'indication entre la couleur d'indicateur modifiée et les couleurs d'indication immédiatement précédente et suivante, et
- si ladite entrée utilisateur indiquait le déplacement du point sélectionné (301) vers un emplacement différent par rapport à une sous-zone de sélection de couleur (205), la mise à jour de la valeur de couleur stockée dans l'enregistrement de point du point sélectionné pour refléter son nouvel emplacement à l'intérieur de la sous-zone de sélection de couleur (205), le changement de la couleur d'indication affichée entre le point sélectionné du graphique (203) et sa projection perpendiculaire sur la droite pour indiquer la nouvelle valeur de couleur, et la mise à jour des fondus (702, 703) des couleurs d'indication entre la couleur d'indication modifiée et les couleurs d'indication immédiatement précédente et suivante.

8. Procédé selon l'une quelconque des revendications 6 et 7, comprenant :
- en réponse à une entrée utilisateur indiquant la sélection d'un point (502) audit premier emplacement et le déplacement du point sélectionné vers une distance différente perpendiculaire à ladite droite,
- la mise à jour de la valeur d'intensité stockée dans l'enregistrement de point du point sélectionné pour refléter sa nouvelle distance de ladite droite,
- le changement de la distance perpendiculaire entre ladite droite et le point correspondant (502) audit premier emplacement pour refléter la valeur d'intensité mise à jour, et
- le déplacement du point correspondant (501) au deuxième emplacement vers un nouvel emplacement par rapport à la sous-zone de sélection d'intensité (207) pour refléter la valeur d'intensité mise à jour.

9. Procédé selon l'une quelconque des revendications précédentes, comprenant :
- l'affichage de deux points (1001, 1002) à des emplacements différents correspondants par rapport audit axe de temps (201),
- en réponse à une première entrée utilisateur indiquant un souhait de relier lesdits deux points (1001, 1002) et à une deuxième entrée utilisateur indiquant la sélection d'un desdits deux points et le déplacement du point sélectionné par rapport audit axe de temps, l'affichage de déplacements synchronisés desdits deux points (1001, 1002) par rapport audit axe de temps (201).

10. Procédé selon l'une quelconque des revendications précédentes, comprenant :
- l'affichage de trois points ou plus à des emplacements différents correspondants par rapport audit axe de temps (201),
- en réponse à une troisième entrée utilisateur indiquant un souhait de sélectionner ces deux points (1102, 1103) parmi lesdits trois points ou plus comme des points d'extrémité qui sont le plus éloignés l'un de l'autre dans la direction de l'axe de temps (203), et à une quatrième entrée utilisateur indiquant un ordre de normaliser des modifications de couleur, l'affichage de déplacements de tous les points desdits trois points ou plus autres que les deux points sélectionnés (1102, 1103) vers des emplacements par rapport audit axe de temps (203) où un taux de changement de couleur absolu entre chaque paire de points consécutifs desdits trois points ou plus est constant.

11. Procédé selon l'une quelconque des revendications précédentes, comprenant :
- l'affichage de trois points ou plus à des emplacements différents correspondants par rapport audit axe de temps (201),
- en réponse à une cinquième entrée utilisateur indiquant un souhait de sélectionner ces deux points (1102, 1103) desdits trois points ou plus comme des points d'extrémité qui sont le plus éloignés l'un de l'autre dans la direction de l'axe de temps (201), et à une sixième entrée utilisateur indiquant un ordre de normaliser les différences de temps, l'affichage de déplacements de tous les points desdits trois points ou plus autres que les deux points sélectionnés (1102, 1103) vers des emplacements par rapport audit axe de temps (201) où une distance en temps entre chaque paire de points consécutifs desdits trois points ou plus est constante.

12. Procédé selon l'une quelconque des revendications précédentes, comprenant :
- en réponse à la détection d'une entrée utilisateur indiquant un ordre de sauvegarde que ledit ordinateur (108) a reçu à travers ladite interface utilisateur (125, 126), le stockage d'une description de l'effet d'éclairage sous la forme d'un fichier d'un langage de balisage, et
- en réponse à la détection d'une entrée utilisateur indiquant un ordre de chargement que ledit ordinateur (108) a reçu à travers ladite interface utilisateur (125, 126), la lecture dans un fichier d'un langage de balisage d'une description d'un effet d'éclairage et l'affichage de l'effet d'éclairage correspondant.

13. Procédé selon l'une quelconque des revendications précédentes, comprenant :
- en réponse à la détection d'une entrée utilisateur indiquant un ordre de test que ledit ordinateur a reçu à travers ladite interface utilisateur, l'exécution d'instructions lisibles par machine qui mènent à la génération de l'effet d'éclairage dans un délai de test qui est différent d'un temps indiqué par l'axe de temps (201).

14. Procédé selon la revendication 13, comprenant :
- l'affichage d'un curseur de temps actuel (1301) à une position dudit axe de temps (201),
- pendant l'exécution des instructions lisibles par machine qui mènent à la génération de l'effet d'éclairage dans le délai de test, l'affichage d'un déplacement dudit curseur de temps actuel (1301) du début de l'axe de temps (201) le long de l'axe de temps (201) vers la fin de l'axe de temps (201), et
- en réponse à la détection d'une entrée utilisateur indiquant le déplacement dudit curseur de temps actuel (1301), le changement de l'exécution des instructions lisibles par machine qui mènent à la génération de l'effet d'éclairage pour correspondre à une position dudit axe de temps (201) vers laquelle le curseur de temps actuel (1301) est déplacé.

15. Procédé selon l'une quelconque des revendications précédentes, comprenant :
- la définition dudit premier emplacement comme un emplacement relatif à une distance particulière dans la direction de temps d'un point de référence (1502, 1504) dans le temps, et
- la déduction de l'emplacement dudit point de référence (1502, 1504) dans le temps à partir d'un ou de plusieurs critères prédéfinis.

16. Procédé selon la revendication 15, dans lequel ledit point de référence (1502, 1504) est l'un du lever ou du coucher du soleil, et lesdits un ou plusieurs critères prédéfinis comprennent une entrée de calendrier indiquant l'heure dudit un parmi lever et le coucher du soleil un jour particulier de l'année.

17. Procédé selon l'une quelconque des revendications précédentes, dans lequel l'étape de l'affichage d'une zone de sélection comprend
- la lecture dans une mémoire (122) d'une description des capacités de rendu des couleurs d'un agencement d'éclairage, et
- l'affichage uniquement de couleurs à l'intérieur de ladite zone de sélection (205, 206, 207) qui, selon ladite description, peuvent être rendues par ledit agencement d'éclairage.

18. Procédé selon l'une quelconque des revendications précédentes, comprenant :
- en réponse à la détection d'une septième entrée utilisateur indiquant un souhait d'une mise à l'échelle temporelle et d'une huitième entrée utilisateur indiquant la sélection d'un point à une extrémité dudit graphique (203) et le déplacement du point sélectionné dans la direction dudit axe de temps (201), le déplacement collectif de tous les points dudit graphique (203) dans la direction dudit axe de temps (201) de quantités proportionnelles aux distances d'origine entre lesdits points dans la direction de l'axe de temps (201), maintenant ainsi les distances relatives entre lesdits points dans la direction de l'axe de temps (201).

19. Procédé selon l'une quelconque des revendications précédentes, comprenant :
- l'affichage de représentations de deux ou plusieurs effets d'éclairage comme des graphiques respectifs (1603, 1605) le long dudit axe de temps (1601, 1602).
